# EUROPÄISCHE PATENTSCHRIFT

(11) **EP 3 730 346 B1**
(45) Veröffentlichungstag und Bekanntmachung des Hinweises auf die Patenterteilung: **29.12.2021**
(21) Anmeldenummer: 20166604.7
(22) Anmeldetag: 30.03.2020
(51) Int. Cl.: B60R 1/00

(54) **SICHTSYSTEM FÜR EIN FAHRZEUG**
VIEW SYSTEM FOR A VEHICLE
SYSTÈME VISUEL POUR UN VÉHICULE

(30) Priorität: 26.04.2019 DE 102019110871
(43) Veröffentlichungstag der Anmeldung: 28.10.2020
(73) Patentinhaber: MEKRA Lang GmbH & Co. KG, 91465 Ergersheim (DE)
(72) Erfinder: Lang, Werner, 91465 Ergersheim (DE); Enz, Andreas, 91593 Burgbernheim (DE)
(74) Vertreter: Kramer Barske Schmidtchen Patentanwälte PartG mbB

(56) Entgegenhaltungen:
- DE-A1-102014 006 153
- DE-A1-102014 018 040
- US-A1- 2009 002 523
- US-A1- 2018 281 698
- US-A1- 2019 075 250

## Beschreibung

### TECHNISCHES GEBIET

Die vorliegende Erfindung betrifft ein Sichtsystem für ein Fahrzeug, insbesondere ein Nutzfahrzeug.

### HINTERGRUND

Bei Kraftfahrzeugen ist es gesetzlich vorgeschrieben, sogenannte Sichtfelder rund um das Fahrzeug für den Fahrer im Fahrbetrieb einsehbar zu machen. Welche Sichtfelder einsehbar sein müssen, basiert auf dem Typ des Kraftfahrzeugs, zum Beispiel Krafträdern, Kraftfahrzeuge zum Transportieren von Passagieren, Kraftfahrzeuge zum Transportieren von Gütern, etc. Die Einsehbarkeit der Sichtfelder muss von einer Einrichtung zur indirekten Sicht bereitgestellt werden und die Sichtfelder müssen die ganze Zeit von dem Fahrer, der auf dem Fahrersitz sitzt, unter Verwendung der Einrichtung zur indirekten Sicht einsehbar sein. Abhängig von dem Typ des Fahrzeugs und insbesondere davon, welche Gebiete um das Fahrzeug herum von dem Fahrer direkt eingesehen werden können, fordern verschiedene gesetzliche Vorgaben, dass bestimmte Sichtfelder jederzeit permanent und zuverlässig unter Verwendung der Einrichtungen zur indirekten Sicht sichtbar sind. In Europa sind die Sichtfelder, die für einen Fahrer jederzeit zuverlässig einsehbar sein müssen, in der UN/ECE-Richtlinie Nr. 46 definiert. Weitere relevante Normen bzw. Richtlinien schließen beispielsweise die ISO 5721, ISO 5006, ISO 16505, ISO14401 und die EU 167/2013 ein. Neben den gesetzlich geforderten Sichtfeldern werden oftmals weitere Bereiche rund um das Fahrzeug, sogenannte Sichtbereiche, durch Einrichtungen zur indirekten Sicht einsehbar gemacht. Sichtbereiche können gesetzlich vorgeschriebene Sichtfelder enthalten.

Üblicherweise wird die Betrachtung der Sichtfelder mit einem oder mehreren Spiegeln ermöglicht. Jedoch haben Spiegel einige Nachteile. Zum Beispiel zeigen Spiegel dem Fahrer lediglich Objekte, die auf derselben Seite des Spiegels wie der Fahrer sind. Irgendein Objekt hinter einem Spiegel kann nicht durch diesen Spiegel gezeigt werden. Zusätzlich zeigen Spiegel, die lediglich aus flachem Glas hergestellt sind, dem Fahrer einen kleinen Bereich, außer die Spiegel sind sehr nahe bei dem Fahrer. Falls sie konvex geformt sind, erzeugt dies eine Bildverzerrung. Große Fahrzeuge weisen üblicherweise sechs oder mehr Spiegel auf, die um die Außenseite des Fahrzeugs herum montiert sind, von denen die meisten konvex und verzerrt sind, was es schwierig für den Fahrer macht, auf alle relevanten Spiegel zur selben Zeit zu achten. Dennoch gibt es um diese Fahrzeuge trotz all der Spiegel üblicherweise immer noch blinde Flecke in den Sichtbereichen, d.h. den Bereichen, in denen keine Sichtfelder sind.

In letzter Zeit wurde es zunehmend üblich, eine Verwendung von Kamerasystemen als Einrichtungen zur indirekten Sicht entweder zusätzlich oder als Ersatz für die Spiegel als Einrichtungen zur indirekten Sicht in Betracht zu ziehen. In solchen Kamerasystemen wird kontinuierlich ein Bild erfasst und ermittelt bzw. bearbeitet und ggf. gespeichert. Die (Video-)Daten, die von einer Bilderfassungseinheit mit einer Bildsensoreinrichtung erfasst werden, werden, beispielsweise unter Verwendung einer Versorgungseinheit und optional nach einer Weiterbearbeitung, zu einer Anzeigeeinrichtung, die sich in der Fahrerkabine befindet, weiter geleitet. Die Anzeigeeinrichtung bildet eine Ansicht des entsprechenden gesetzlich vorgeschriebenen Sichtfelds oder einer Vielzahl von Sichtfeldern und optional weitere Informationen, wie beispielsweise mögliche Kollisionsrisiken, Abstände zu anderen Objekten, etc., für das Gebiet um das Fahrzeug herum auf eine Art und Weise ab, dass die Sichtfelder jederzeit für den Fahrer permanent einsehbar sind. Gleichzeitig liefert das Sichtsystem eine verbesserte Nachtansicht, flexiblere Anordnungsmöglichkeiten und größere Sichtfelder mit der Möglichkeit einer geringeren Verzerrung.

Permanent einsehbar bedeutet in diesem Zusammenhang, dass die Ansicht des Sichtfelds in einer zeitlich ununterbrochenen Art und Weise abgebildet wird, d.h., nicht durch abwechselndes Anzeigen und Verbergen des Sichtfelds oder von Teilen davon, oder durch Einblenden anderer Darstellungen derart unterbrochen wird, dass das Sichtfeld nicht komplett gesehen werden kann. Entsprechend werden das entsprechende Sichtfeld oder die Sichtfelder kontinuierlich und in Echtzeit auf der Anzeigeeinrichtung gezeigt bzw. einsehbar gemacht. Dies gilt zumindest für als permanent einsehbar vorgeschriebene Sichtfelder für alle Fahrzeugzustände, bei denen der Zündschalter eingeschaltet ist und/oder bevorzugter Weise zum Beispiel gekoppelt an einen Sensor, der ein entsprechendes Signal empfängt, beispielsweise eine Türöffnungssignal oder ein Zündungseinschaltsignal.

Moderne Spiegel erzeugen ein nahezu perfekt scharfes Bild für einen Fahrer. Der Detaillierungsgrad, der dem Fahrer zur Verfügung steht, hängt von dem Abstand zu dem Objekt, der Krümmung und dem Reflexionsgrad des Spiegels und der Sehkraft des Fahrers ab. Mit Kamerasystemen wird der Detaillierungsgrad von vielen verschiedenen Parametern beeinflusst: Der Auflösung des Kamerasensors, dem Sichtfeld der Kamera, aber auch der Auflösung des Monitors, welcher Teil des Kamerasichtfeldes auf dem Monitor angezeigt wird und wie groß dieser Teil ist, wie weit der Monitor von dem Fahrerplatz entfernt ist und der Sehkraft des Fahrers. Ein wesentlicher Parameter, der den Detaillierungsgrad beeinflusst, ist der Verzeichnungsfehler des optischen Elements der Kamera, wie beispielsweise der Linse oder einer Anordnung aus mehreren Linsen. Jedes optische Element weist ein gewisses Verzeichnungsverhalten auf. In der Regel nimmt der Verzeichnungsfehler mit zunehmendem Abstand um einen Punkt auf dem optischen Element, der auch Verzeichnungszentrum bezeichnet wird und beispielsweise die optische Achse des optischen Elements enthält, wenigstens bereichsweise zu. Am Verzeichnungszentrum ist der Verzeichnungsfehler somit am geringsten. Der Verzeichnungsfehler eines optischen Elements kann mittels einer Verzeichnungskurve beschrieben und dargestellt werden. Eine Verzeichnungskurve ist die graphische Darstellung des Verzeichnungsfehlers eines optischen Elements als Funktion der Abstände von einem Verzeichnungszentrum, wie der optischen Achse. Ist das optische Element rotationssymmetrisch, ist die Verzeichnungskurve die grafische Darstellung des Verzeichnungsfehlers als Funktion des Radialabstands vom Verzeichnungszentrum. Das Verzeichnungsverhalten eines optischen Elements ist somit ein geometrischer Abbildungsfehler optischer Systeme, der in der Linsengleichung zu einer lokalen Veränderung des Abbildungsmaßstabes führt.

Liegt ein Objekt in der Nähe, insbesondere auf dem oder angrenzend an das Verzeichnungszentrum des optischen Elements, ist die Abbildung im Wesentlichen verzeichnungsfrei bzw. verzeichnungsarm und es ist keine Bearbeitung der Bilddaten nötig. Der Fahrer sieht das Objekt auf seinem Monitor im Wesentlichen unverzerrt bzw. verzeichnungsfrei und kann die Größe des Objekts und dessen Orientierung und Lage in der angezeigten Fahrzeugumgebung zuverlässig erkennen und entsprechend handeln, um eine Kollision mit dem Objekt zu vermeiden.

Liegt ein Objekt jedoch entfernt von dem Verzeichnungszentrum des optischen Elements, insbesondere in einem Bereich, in dem das Verzeichnungsverhalten groß ist, sieht der Fahrer das Objekt auf seinem Monitor verzerrt bzw. verzeichnet und kann die Größe des Objekts und dessen Orientierung und Lage in der angezeigten Fahrzeugumgebung nicht zuverlässig erkennen. Insbesondere ist es für den Fahrer schwierig, das Maß der Verzeichnung ohne weitere Referenz zuverlässig abzuschätzen und somit die Lage und Größe von Objekten zuverlässig einzuschätzen und zu beurteilen. Entsprechend kann es aufgrund der verzerrten bzw. verzeichneten Abbildung des Objekts zu Kollisionen zwischen Fahrzeug und Objekt kommen.

Dies ist insbesondere der Fall, wenn das sogenannte trailer panning angewendet wird, d.h., das Nachführen eines einem Bildsensor entnommenen Bildausschnitts. Trailer panning ist insbesondere bei Kurvenfahrten oder jeder anderen Fahrsituation relevant, bei der der Anhänger relativ zur Zugmaschine ausschwenkt und der Fahrer und/oder eine Steuereinheit den auf dem Monitor angezeigten Bildausschnitt nachführen muss, um die Umgebung um den Anhänger weiterhin zuverlässig einsehen zu können. Ein Nachführen des Bildausschnitts an den Rand des Bildsensors oder allgemein an eine Position auf dem Bildsensor, an der die Umgebung um das Fahrzeug stark verzeichnet abgebildet wird, führt jedoch dazu, dass dem Fahrer der entsprechende Ausschnitt der Fahrzeugumgebung nicht realitätsgetreu auf dem Monitor angezeigt wird und er Größenverhältnisse, Abstände von Objekten, usw. nicht zuverlässig einschätzen kann.

Aus dem Stand der Technik ist neben einer mechanischen Verstellung (z.B. Schwenken) der Kamera auch eine Anpassung der Verzeichnungskurve bekannt, um eine möglichst verzeichnungsfreie Darstellung zu erzielen und das oben beschriebene Verzeichnungsverhalten des optischen Elements zu kompensieren.

Mechanisch zu verstellende Kameras haben jedoch den Nachteil, dass sie nur einen begrenzten Ausschnitt aus der Fahrzeugumgebung aufnehmen können und aufgrund des Verstellmechanismus verschleißanfällig sind. Dazu ist eine weitere Sensoreinrichtung nötig, um Objekte, die sich nicht in dem ursprünglich aufgenommenen Ausschnitt befinden, zu detektieren.

Eine Anpassung der Verzeichnungskurve hingegen erfordert eine exakte und damit rechenleistungsaufwändige Anpassung aller Punkte auf der ursprünglichen Verzeichnungskurve. Mechanisch/optisch ist eine Kompensation durch komplizierte Linsenanordnungen und/oder Anordnungen zusätzlicher optischer Elemente möglich. Dadurch wird das Kamerasystem jedoch teuer.

Ansichtssysteme sind z.B. aus den Druckschriften US 2009/0002523 A1 und DE 10 2014 018 040 A1 bekannt. US 2018/0281698 A offenbart ein Fahrzeug-Kamera-Kalibrierungssystem. Ein Verfahren zu Bilddarstellung eines indirekten Sichtfeldes im Fahrzeugumfeld eines Fahrzeugs ist aus der DE 10 2014 006 153 A1 bekannt. Eine Bildanzeigevorrichtung ist aus der US 2019/0075250 A1 bekannt.

### ZUSAMMENFASSUNG

Entsprechend ist es eine Aufgabe der vorliegenden Erfindung, ein Sichtsystem für ein Fahrzeug, insbesondere ein Nutzfahrzeug, vorzusehen, das dem Fahrer die Fahrzeugumgebung unabhängig von deren Lage in Bezug auf das Verzeichnungszentrum, wie z.B. die optische Achse, eines optischen Elements so exakt wie möglich anzeigt, so dass der Fahrer Objekte in der Fahrzeugumgebung möglichst realitätsgetreu erkennen kann. Gleichzeitig soll die Lösung kostengünstig erreichbar sein.

Die oben genannte Aufgabe wird durch ein Sichtsystem für ein Fahrzeug mit den Merkmalen des Anspruchs 1 gelöst. Bevorzugte Ausführungsformen sind in den abhängigen Ansprüchen angegeben.

Der Erfindung liegt der Gedanke zugrunde, ein Sichtsystem für ein Fahrzeug mit wenigstens einer Bildaufnahmeeinheit (z.B. eine Kamera), wenigstens einer Bildbearbeitungseinheit (z.B. eine ECU) und wenigstens einer Bildwiedergabeeinheit (z.B. ein Monitor, wie beispielsweise ein LCD-, TFT- oder LED-Monitor) bereitzustellen, bei dem die Bildbearbeitungseinheit derart ausgebildet ist, dass sie den auf einem Bildsensor einer Bildaufnahmeeinheit abgebildeten bzw. aufgezeichneten Bilddaten einer Fahrzeugumgebung einen Teilbereich bzw. einen Bildausschnitt entnimmt/extrahiert und diesen Teilbereich der Fahrzeugumgebung dem Fahrer auf der Bildwiedergabeeinheit anzeigt. Je nach Position des Teilbereichs auf einem in der Bildaufnahmeeinheit angeordneten Bildsensor weist der Teilbereich eine gegenüber einer anderen Position auf dem Bildsensor veränderte Geometrie auf. Die veränderte Geometrie wird von der Bildbearbeitungseinheit bestimmt. Durch die veränderte Geometrie kann ein Verzeichnungsverhalten eines in der Bildaufnahme enthaltenen optischen Elements kompensiert oder wenigstens verringert werden, so dass dem Fahrer die Fahrzeugumgebung realitätsgetreu oder wenigstens annähernd realitätsgetreu angezeigt wird. Unter einer veränderten Geometrie wird insbesondere die Veränderung einzelner Seitenlängen der Geometrie, wie z.B. eines Rechtecks, eine Drehung, eine Scherung und/oder eine Freiformdeformation (z.B. polygonale Formen mit vier Ecken) der Geometrie verstanden. Würde die Geometrie nicht verändert werden, sondern unabhängig von der Lage des entnommenen Teilbereichs auf dem Bildsensor stets gleich groß sein, würden Bilddaten aus Teilbereichen, die an Positionen auf dem Bildsensor diesem entnommen werden, wo die Verzeichnung der Bilddaten sehr groß ist, dem Fahrer stark verzeichnet angezeigt werden und der Fahrer könnte die Fahrzeugumgebung nicht zuverlässig einschätzen.

Das Verzeichnungsverhalten des optischen Elements kann z.B. tonnenförmig oder kissenförmig sein. Dabei nimmt die Größe eines Objekts auf dem Bildsensor und entsprechend dem Monitor mit zunehmender Entfernung vom Verzeichnungszentrum bei tonnenförmigen Verzeichnungen ab und bei kissenförmigen Verzeichnungen zu. Das Verzeichnungsverhalten eines optischen Elements ist somit nahe bei oder in der Abbildung des Verzeichnungszentrums, z.B. der optischen Achse, am geringsten und nimmt mit zunehmender Entfernung von der Abbildung des Verzeichnungszentrums zu. Das Verzeichnungszentrum ist eine angenommene, gedachte Linie, die durch den Krümmungsmittelpunkt des optischen Elements läuft. Bei einem optischen Element des Kamerasystems mit mehreren optischen Teilelementen, zum Beispiel mehreren Linsen, die hinter einander angeordnet sind, ergibt sich das Verzeichnungszentrum aus einer Linie, die durch den Krümmungsmittelpunkt jedes Teilelements läuft. Das Verzeichnungsverhalten eines optischen Elements kann z.B. kontinuierlich mit Entfernung von dem Verzeichnungszentrum zum Rand des optischen Elements zunehmen oder kann z.B. lediglich abschnittsweise über die Entfernung von dem Verzeichnungszentrum zu- oder auch abnehmen.

Der den Bilddaten auf dem Bildsensor entnommene Teilbereich weist eine gewisse Geometrie als gedachte Begrenzung auf, die zum Kompensieren bzw. wenigstens teilweisen Reduzieren des Verzeichnungsverhaltens des optischen Elements abhängig von der Lage des Bildausschnitts auf dem Bildsensor variiert. Die Geometrie bzw. gedachte Begrenzung des auf einem Bildsensor einer Bildaufnahmeeinheit abgebildeten bzw. aufgezeichneten Bildausschnitts ist somit abhängig von der Position, wo der Bildausschnitt auf dem Bildsensor entnommen wird. Wird beispielsweise ein rechteckiger Bereich als Bildausschnitt entnommen, so hat dieser an einer ersten Entnahmeposition Seitenlängen P1 und P2, während er an einer anderen Entnahmeposition auf dem Bildsensor Seitenlängen P1' und P2' hat, wobei P1 ≠ P1' und/oder P2 ≠ P2' ist. Zusätzlich oder alternativ können die Seitenlängen P1 und P1' und/oder P2 und P2' zueinander unter einem Winkel stehen und nicht parallel sein. Auch ist es möglich, an einer Position einen z.B. rechteckigen Bildausschnitt zu entnehmen, während an einer anderen Position ein nicht rechteckiger, z.B. rautenförmiger Bildausschnitt entnommen wird.

Das oben beschrieben Sichtsystem ist insbesondere bei Nutzfahrzeugen, die eine Zugmaschine und einen Anhänger aufweisen, vorteilhaft. Bei Nutzfahrzeugen, die eine Zugmaschine und einen Anhänger aufweisen, muss der Bildausschnitt bei Fahrsituationen, wie beispielsweise bei Kurvenfahrten, bei denen der Anhänger relativ zur Zugmaschine ausschert bzw. schwenkt, und eine Beibehaltung des Bildausschnitts dazu führen würde, dass dem Fahrer die Anhängerseitenwand auf dem Monitor angezeigt wird, derart nachgeführt werden, dass der Fahrer stets die Fahrzeugumgebung zuverlässig einsehen kann. In Übereinstimmung mit der vorliegenden Erfindung kann das Nachführen Bild für Bild erfolgen, wobei die Geometrie jedes Bildes gegenüber dem vorigen Bild angepasst ist. Beim Nachführen eines Bildausschnitts wird somit eine geeignete Anzahl von Bildern, beispielsweise ein Bild pro Pixeländerung, die sich untereinander abhängig von der jeweiligen Position des Bildes auf dem Bildsensor in ihrer Geometrie unterscheiden, erzeugt und nacheinander auf dem Monitor dem Fahrer angezeigt, so dass dem Fahrer der Eindruck vermittelt wird, dass der ursprüngliche Bildausschnitt abhängig von dem Auslenkungswinkel des Anhängers zu der Zugmaschine verschoben wird. Tatsächlich entspricht das Verschieben jedoch nur einer Anzahl von Entnahmen einzelner Bildausschnitte auf dem Bildsensor, die sich geometrisch voneinander unterscheiden. Die Anzahl der Bildausschnitte hängt von dem Maß der Auslenkung des Anhängers zu der Zugmaschine ab und kann entweder von dem Fahrer manuell (durch Drücke oder Halten eines Knopfes, einer Auswahl auf einem Touchpad, etc.) oder über Signale diverser Sensoreinrichtungen (Drehwinkelsensor, Blinker, etc.) gesteuert werden.

Bevorzugter Weise ist der Teilbereich an einer Entnahmeposition als Referenzteilbereich mit einer Referenzgeometrie definiert. Diese Referenzgeometrie kann sich an jeder beliebigen Stelle auf dem Bildsensor befinden, d.h. die zugehörige Entnahmeposition kann an jeder Stelle auf dem Bildsensor sein. Die Referenzgeometrie ist z.B. eine vom Hersteller des Sichtsystems vorgegebene Geometrie, kann aber auch von dem Fahrer oder der Steuereinheit abhängig von den Wiedergabeanforderungen (z.B. fahrerspezifische oder gesetzliche Vorgaben) bestimmt werden.

Vorzugsweise ist der Teilbereich als ein Referenzteilbereich definiert, wo die Verzeichnung gering ist, insbesondere z.B. wenn der Teilbereich dem Bildsensor in der Nähe einer Position entnommen wird, die der Abbildung des Verzeichnungszentrums der Bildaufnahmeeinheit auf dem Bildsensor entspricht. Beispielsweise wird der Teilbereich dem Bildsensor an einer Position oder unmittelbar an eine Position angrenzend entnommen, die der Abbildung des Verzeichnungszentrums, z.B. der optischen Achse, der Bildaufnahmeeinheit auf dem Bildsensor entspricht. Die Bezeichnung "in der Nähe von" beschreibt damit z.B. eine Position des Teilbereichs, so dass dieser die Abbildung des Verzeichnungszentrums der Bildaufnahmeeinheit auf dem Bildsensor enthält und mindestens einen Punkt mit der Abbildung des Verzeichnungszentrums der Bildaufnahmeeinheit auf dem Bildsensor gemeinsam hat. Der Referenzteilbereich entspricht damit einem Teilbereich des Bildsensors, der aufgrund seiner Nähe zur Abbildung des Verzeichnungszentrums der Bildaufnahmeeinheit auf dem Bildsensor dem Fahrer auf der Bildwiedergabeeinheit weitgehend verzeichnungsfrei dargestellt wird, ohne dass eine Kompensation des Verzeichnungsverhaltens des optischen Elements nötig ist. Der Referenzteilbereich entspricht damit dem Teilbereich des Bildsensors, der an einer Position auf dem Bildsensor angeordnet ist, an der die von dem optischen Element aufgenommenen Bilddaten der Umgebung des Fahrzeugs keine oder lediglich eine minimale Verzeichnung aufweisen, die keine Kompensation erfordern.

Nach einer bevorzugten Ausführungsform ist die Referenzgeometrie des Referenzteilbereichs ein Rechteck mit einer Breite und einer Länge. Es ist aber auch denkbar, dass die Referenzgeometrie quadratisch, dreieckig, polygonal, annähernd kreisrund, oval, elliptisch, etc. ist. Die Wahl der Geometrie kann z.B. von der Form von Objekten abhängen, die sich in der Fahrzeugumgebung befinden, oder kann von der Geometrie der Bildwiedergabeeinheit abhängen. Die Referenzgeometrie kann entweder für das Sichtsystem auf eine einzige Geometrie festgelegt sein oder kann sich abhängig von den Anforderungen, die an das Sichtsystem gestellt werden, Parametern (z.B. Auflösung), die eine geeignete Darstellung der Fahrzeugumgebung erfordern, etc. ändern. Die Referenzgeometrie kann somit abhängig von Parametern des Sichtsystems sein. Wenn mehrere Teilbereiche entnommen werden, können die Teilbereiche unterschiedliche Geometrien aufweisen, wie z.B. ein Rechteck, eine Raute, ein Kreis, etc.

Wenn der Teilbereich entfernt von der Position angeordnet ist, die der Abbildung des Verzeichnungszentrums der Bildaufnahmeeinheit auf dem Bildsensor entspricht, kann der Teilbereich eine gegenüber der Referenzgeometrie verdrehte und/oder verzerrte und/oder skalierte Geometrie bzw. gedachte Begrenzung aufweisen. Beispielweise kann der Teilbereich gegenüber der Referenzgeometrie bei einer Verdrehung auf dem Bildsensor geneigt bzw. gekippt sein, so dass sich zwischen einer Seitenfläche des Teilbereichs und einer gedachten auf dem Bildsensor horizontal verlaufenden Linie ein kleinerer oder größerer Winkel als zwischen der entsprechenden Seitenfläche des Referenzbereichs und der gedachten auf dem Bildsensor horizontal verlaufenden Linie ergibt. Bei einer Verzerrung stimmt das Verhältnis der Abmaße des Teilbereichs nicht mehr mit dem Verhältnis der Abmaße des Referenzbereichs überein und der Teilbereich weist andere Proportionen auf als der Referenzbereich. Bei einer Skalierung ändert sich die Größe des Teilbereichs unter Einhaltung der Proportionen. Vorzugsweise nimmt der Grad der Verdrehung und/oder Verzerrung und/oder Skalierung der Referenzgeometrie mit zunehmendem Abstand zu der Abbildung des Verzeichnungszentrums der Bildaufnahmeeinheit auf dem Bildsensor zumindest bereichsweise zu, insbesondere dann, wenn eine rotationssymmetrisch vom Verzeichnungszentrum zu entnehmende Verzeichnung vorliegt. Mit anderen Worten wird die Verdrehung und/oder Verzerrung und/oder Skalierung der Referenzgeometrie bei kontinuierlich fortschreitender Verzerrung größer bzw. stärker, d.h. in der Regel je weiter der Teilbereich von der Abbildung des Verzeichnungszentrums der Bildaufnahmeeinheit beabstandet ist. Oder die Verdrehung und/oder Verzerrung und/oder Skalierung der Referenzgeometrie wird bei diskontinuierlich fortschreitender bzw. abschnittsweiser Verzerrung in den verzerrten Bereichen größer bzw. stärker.

Alternativ nimmt der Grad der Verdrehung und/oder Verzerrung und/oder Skalierung der Referenzgeometrie mit zunehmendem Abstand zu dem Verzeichnungszentrum der Bildaufnahmeeinheit bereichsweise ab, wenn eine starke Verzeichnung trotz zunehmendem Abstand zur Abbildung des Verzeichnungszentrums auf dem Bildsensor sich wieder abschwächt, dass heißt, wenn die Verzeichnung zunächst mit zunehmendem Abstand zur Abbildung des Verzeichnungszentrums auf dem Bildsensor zunimmt und dann mit weiter zunehmendem Abstand zur Abbildung des Verzeichnungszentrums auf dem Bildsensor wieder abnimmt. Der Grad der Verdrehung und/oder Verzerrung und/oder Skalierung der Referenzgeometrie ist somit vorzugsweise abhängig vom Grad der Verzerrung bzw. des Verzeichnungsverhaltens des optischen Elements.

Bevorzugter Weise erfolgt die Bestimmung einer ersten Abmessung der Geometrie des Teilbereichs in einer ersten Raumrichtung. Die Bestimmung einer ersten, beispielsweise horizontalen, Abmessung und damit eine Anpassung der ersten Abmessung kann für eine Kompensation des Verzeichnungsverhaltens des optischen Elements abhängig von dem Ausmaß der Verzeichnung, der Position des entsprechenden Teilbereichs auf dem Bildsensor, etc. ausreichend sein. Es kann jedoch erforderlich sein, dass die Bestimmung einer zweiten, beispielsweise vertikalen, Abmessung der Geometrie des Teilbereichs erforderlich ist. Die Bestimmung der zweiten Abmessung kann dann in einer zweiten Raumrichtung erfolgen, wobei die erste und die zweite Raumrichtung vorzugsweise senkrecht zueinander verlaufen.

Bevorzugter Weise wird die Geometrie des Teilbereichs mittels eines Berechnungsalgorithmus bestimmt oder vorher festgelegt.

Der Berechnungsalgorithmus verwendet beispielsweise wenigstens eine Kompensationskurve, mit der die Breite und/oder die Länge des Teilbereichs auf dem Bildsensor abhängig von einer Lageänderung des dem Teilbereich entsprechenden Abbildungswinkels der Bildaufnahmeeinheit bestimmt werden. Es sind auch zwei Kompensationskurven für die Bestimmung der Höhe und der Breite des Teilbereichs denkbar. Ebenso sind auch drei oder mehr Kompensationskurven für die zusätzliche Bestimmung eines erforderlichen Verdrehwinkels denkbar. Alternativ kann die Bestimmung des Verdrehwinkels über ein Vektorfeld erfolgen, indem z.B. jedem Sensorpixel basierend auf der Abbildungsfunktion der Optik mit einer Verzeichnungskurve und dem Neigungswinkel der Kamera eine Koordinate zum auf dem Sensor abgebildeten Fahrzeugumgebung zugeordnet wird. Weiter alternativ kann die Bestimmung des Verdrehwinkels mittels einer mathematischen Funktion erfolgen. Der Teilbereich, der dem Bildsensor entnommen wird, entspricht einem Bereich der Fahrzeugumgebung, der mit einem gewissen Abbildungswinkel von der Bildaufnahmeeinheit aufgenommen wird. Der Abbildungswinkel ist ein Winkel, der in den Sichtwinkel der Aufnahmeeinheit fällt und ist damit kleiner als der Sichtwinkel der Aufnahmeeinheit. Der Sichtwinkel der Aufnahmeeinheit entspricht dem maximal möglichen Winkel, mit dem die Bildaufnahmeeinheit Bilddaten aufnehmen kann und ist abhängig von der Auslegung des optischen Elements. Der dem Sichtwinkel der Bildaufnahmeeinheit entsprechende Teil der Fahrzeugumgebung kann als Bilddaten auf der gesamten Sensorfläche abgebildet werden. Je nach Entnahmeposition des Teilbereichs auf dem Bildsensor, ändert sich auch die Lage des Abbildungswinkels. Der Abbildungswinkel schwenkt somit über den Sichtwinkelbereich der Bildaufnahmeeinheit, wobei das optische Element das Drehzentrum bildet, um das der Abbildungswinkel schwenkt bzw. rotiert. Beispielsweise kann der Abbildungswinkel seine Lage nur geringfügig ändern und damit nur um wenige Grad innerhalb des Sichtwinkelbereichs um das Drehzentrum geschwenkt werden. Es ist aber auch möglich, dass sich die Lage des Abbildungswinkels stark ändert. Dann schwenkt der Abbildungswinkel um viele Grad innerhalb des Sichtwinkelbereichs um das Drehzentrum.

Vorzugsweise kann die Kompensationskurve einer nicht-linearen Kurve und/oder wenigstens einer mathematischen Funktion entsprechen. Als mathematische Funktionen kommen eine Sprungfunktion, eine Exponentialfunktion, eine logarithmische Funktion, etc. in Frage. Insbesondere bei Verwendung einer Sprungfunktion als Kompensationskurve erfolgt keine kontinuierliche Kompensation des Verzeichnungsverhaltens des optischen Elements, sondern lediglich eine schrittweise Kompensation. Das heißt, die Verdrehung, Verzerrung und/oder Skalierung des Referenzteilbereichs erfolgt schrittweise je nachdem, wo der Teilbereich der Bildsensoroberfläche entnommen wird. Mit anderen Worten ändert sich die Geometrie des Referenzbereichs an zwei benachbarten, aber beabstandeten Positionen auf dem Bildsensor, wohingegen zwischen diesen Positionen jedoch keine Änderung der Geometrie erfolgt. Dies reduziert wesentlich die Rechenleistung der Bildbearbeitungseinheit.

Alternativ kann die Kompensationskurve einer frei definierten Kurve entsprechen, deren Werte beispielsweise empirisch ermittelt werden und in der Bearbeitungseinheit gespeichert sind. Genauer werden jedem Punkt auf der Kompensationskurve Erfahrungswerte bzw. Messwerte betreffend die Verdrehung, Verzerrung und/oder Skalierung des Referenzbereichs in Relation zu der Position des Teilbereichs auf dem Bildsensor zugeordnet und in einer Datenbank gespeichert, so dass der Berechnungsalgorithmus bei der Kompensation des Verzeichnungsverhaltens des optischen Elements die entsprechenden Werte aus der Datenbank auslesen und auf die Geometrie des Referenzbereichs anwenden kann.

Alternativ kann die Kompensationskurve der Verzeichnungskurve des optischen Elements entsprechen. Somit erfolgt in diesem Fall eine zum Verzeichnungsverhalten des optischen Elements direkt proportionale Anpassung der Referenzgeometrie. Nach einer bevorzugten Ausführungsform entspricht die Kompensationskurve zusätzlich einer Verzeichnungskurve des optischen Elements, die einer digitalen Verzeichnungskorrektur unterzogen wurde.

Vorzugsweise sind der dem Referenzteilbereich entsprechenden Abbildungswinkel und der dem Teilbereich entsprechenden Abbildungswinkel gleich groß. Es ist aber auch denkbar, dass die Kompensation des Verzeichnungsverhaltens des optischen Elements derart erfolgt, dass sich die Referenzgeometrie nicht in dem Maße ändert, wie dies der Fall bei gleich großen Winkeln wäre, sondern sich nur insoweit ändert, dass bei voneinander abweichenden Winkeln trotzdem eine Kompensation erfolgt.

Vorzugsweise enthält der Teilbereich das Sichtfeld eines Hauptspiegels und/oder eines Weitwinkelspiegels eines Nutzfahrzeugs. Beispielsweise entspricht das Sichtfeld des Hauptspiegels und/oder Weitwinkelspiegels den Sichtfeldern II bzw. IV wie sie in der UN/ECE-Richtlinie Nr. 46 definiert sind.

Der Bereich des Bildsensors, der von der Bildbearbeitungseinheit bestimmt wird, dass er auf dem der Bildwiedergabeeinheit dargestellt werden soll, wird entweder durch einen einzigen Teilbereich realisiert oder durch zwei oder mehr kontinuierlich aneinander angrenzende Teilbereiche. Die zwei oder mehr kontinuierlich aneinander angrenzenden Teilbereiche können bei der Entnahme (abhängig von der Position der Entnahme) unterschiedliche Geometrien haben und werden bei ihrer Wiedergabe auf der Bildwiedergabeeinheit wieder zusammengefügt oder in zwei verschiedenen Bereichen auf der Wiedergabeeinheit dargestellt.

Die Bilddaten werden vorzugsweise vor ihrer Wiedergabe auf der Bildwiedergabeeinheit von der Bildbearbeitungseinheit und/oder einer weiteren Bildbearbeitungseinheit bearbeitet, z.B. im Hinblick auf Farbsättigung, Kontrast, Auflösung, Über- und Unterbelichtung, Unschärfe, Bildrauschen, etc.

Ein weiterer Aspekt der vorliegenden Erfindung betrifft ein Spiegelersatzsystem für ein Fahrzeug mit einem Sichtsystem wie oben beschrieben.

Innerhalb eines Spiegelersatzsystems kann das Sichtsystem z.B. derart eingesetzt werden, dass abhängig von einem Fahrzustand des Fahrzeugs bestimmte, ein dem Fahrzustand jeweils zugeordneter Teilbereich entnommen wird und auf der Wiedergabeeinheit dargestellt wird. Alternativ oder ergänzend ist denkbar, dass als Standard ein bestimmter Teilbereich entnommen und dargestellt wird, der Fahrer jedoch, ggf. nur in bestimmten Fahrzuständen, manuell auf die Entnahme eines anderen Teilbereichs umschalten kann.

### KURZE BESCHREIBUNG DER ZEICHNUNGEN

Im Folgenden wird die Erfindung beispielhaft unter Bezugnahme auf die angehängten Figuren beschrieben, in denen:
- Fig. 1: einen schematischen Aufbau zweier erfindungsgemäßer Sichtsysteme zeigt,
- Fig. 2a: eine Draufsicht auf ein Nutzfahrzeug zeigt, das die Sichtsysteme aus Fig. 1 verwendet,
- Fig. 2b: eine Seitenansicht des Nutzfahrzeugs aus Fig. 2a zeigt, das die Sichtsysteme aus Fig. 1 verwendet,
- Fig. 2c: ein dreidimensionales Sichtfeld einer Kamera zeigt,
- Fig. 3a: eine Draufsicht auf einen ersten und einen zweiten Abbildungswinkel zeigt, die von einer Fahrzeugkamera des erfindungsgemäßen Sichtsystems gemäß einer ersten Ausführungsform erfasst werden,
- Fig. 3b: einen Bildsensor des erfindungsgemäßen Sichtsystems gemäß der ersten Ausführungsform zeigt, auf dem ein erster Teilbereich definiert ist,
- Fig. 3c: einen Monitor des erfindungsgemäßen Sichtsystems gemäß der ersten Ausführungsform zeigt, auf dem der erste Teilbereich abgebildet ist,
- Fig. 3d: den Bildsensor des erfindungsgemäßen Sichtsystems gemäß der ersten Ausführungsform zeigt, auf dem ein zweiter Teilbereich definiert ist,
- Fig. 3e: den Monitor des erfindungsgemäßen Sichtsystems gemäß der ersten Ausführungsform zeigt, auf dem der zweite Teilbereich abgebildet ist,
- Fig. 3f: eine Kompensationskurve der Kamera des erfindungsgemäßen Sichtsystems gemäß der ersten Ausführungsform zeigt,
- Fig. 4a: den Bildsensor des erfindungsgemäßen Sichtsystems gemäß der ersten Ausführungsform zeigt, auf dem der zweite Teilbereich modifiziert ist,
- Fig. 4b: einen Monitor des erfindungsgemäßen Sichtsystems gemäß der ersten Ausführungsform zeigt, auf dem der modifizierte Teilbereich abgebildet ist,
- Fig. 5a: eine Draufsicht auf einen ersten und einen zweiten Abbildungswinkel zeigt, die von einer Fahrzeugkamera des erfindungsgemäßen Sichtsystems gemäß einer zweiten Ausführungsform erfasst werden,
- Fig. 5b: eine Seitenansicht eines ersten und einen zweiten Abbildungswinkel zeigt, die von einer Fahrzeugkamera des erfindungsgemäßen Sichtsystems gemäß der zweiten Ausführungsform erfasst werden,
- Fig. 5c: einen Bildsensor des erfindungsgemäßen Sichtsystems gemäß der zweiten Ausführungsform zeigt, auf dem ein erster Teilbereich definiert ist,
- Fig. 5d: einen Monitor des erfindungsgemäßen Sichtsystems gemäß der zweiten Ausführungsform zeigt, auf dem der erste Teilbereich abgebildet ist,
- Fig. 5e: den Bildsensor des erfindungsgemäßen Sichtsystems gemäß der zweiten Ausführungsform zeigt, auf dem ein zweiter Teilbereich definiert ist,
- Fig. 5f: einen Monitor des erfindungsgemäßen Sichtsystems gemäß der zweiten Ausführungsform zeigt, auf dem der zweite Teilbereich abgebildet ist,
- Fig. 5g: eine Kompensationskurve der Bildbearbeitungseinheit des erfindungsgemäßen Sichtsystems gemäß der zweiten Ausführungsform in einer ersten Raumrichtung zeigt,
- Fig. 5h: eine Kompensationskurve der Bildbearbeitungseinheit des erfindungsgemäßen Sichtsystems gemäß der zweiten Ausführungsform in einer zweiten Raumrichtung zeigt,
- Fig. 5i: einen Bildsensor des erfindungsgemäßen Sichtsystems gemäß einer dritten Ausführungsform zeigt, auf dem zwei Teilbereiche definiert sind,
- Fig. 5j: eine Abwicklung des Gitterzylinders aus Fig. 2c bezogen auf die Situation aus Fig. 5i zeigt,
- Fig. 5k: einen Monitor des erfindungsgemäßen Sichtsystems gemäß der dritten Ausführungsform zeigt,
- Fig. 6a: einen Bildsensor des erfindungsgemäßen Sichtsystems gemäß einer vierten Ausführungsform zeigt,
- Fig. 6b: eine Abwicklung des Gitterzylinders aus Fig. 2c bezogen auf die Situation aus Fig. 6a zeigt,
- Fig. 6c: einen Monitor des erfindungsgemäßen Sichtsystems gemäß der vierten Ausführungsform zeigt.

### DETAILLIERTE BESCHREIBUNG DER ERFINDUNG

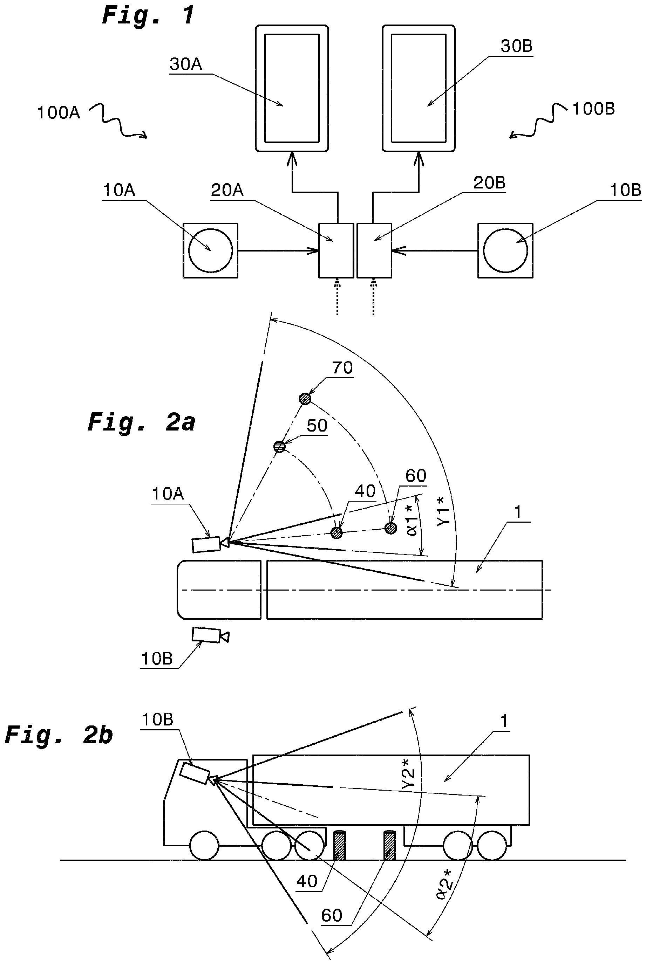

Fig. 1 zeigt einen schematischen Aufbau zweier Sichtsysteme 100A, 100B gemäß der vorliegenden Erfindung, die beispielsweise ein Sichtsystem 100A für die linke Fahrzeugseite und ein Sichtsystem 100B für die rechte Fahrzeugseite bilden. Die Sichtsysteme 100A, 100B weisen jeweils eine Aufnahmeeinheit 10A, 10B, eine Berechnungseinheit 20A, 20B und eine Wiedergabeeinheit 30A, 30B auf. Damit entsprechen die Sichtsysteme 100A, 100B jeweils einem indirekten Sichtsystem, beispielsweise einem Kamera-Monitor-System und somit einem Spiegelersatzsystem, mit dem indirekt die Umgebung eines Fahrzeug eingesehen werden kann.

Die jeweilige Aufnahmeeinheit 10A, 10B ist angepasst zum Aufnehmen von Bildern einer Umgebung um ein Fahrzeug, insbesondere ein Nutzfahrzeug, in Form von Bilddaten. Dazu ist die Aufnahmeeinheit 10A, 10B auf geeignete Art und Weise an dem Fahrzeug angebracht. Die Aufnahmeeinheit 10A, 10B kann eine Kamera sein, insbesondere eine Kamera mit einem Sensor nach einer CMOS- oder CCD-Technologie, oder ein jeglicher anderer Bildsensor, der geeignet ist, bewegte Bilder aufzunehmen. Es können mehrere Aufnahmeeinheiten 10A, 10B pro Sichtsystem 100A, 100B vorgesehen sein. Die Aufnahmeeinheit 10A, 10B steht mit der jeweiligen Berechnungseinheit 20A, 20B in Verbindung, beispielsweise über Verbindungskabel oder Funk.

Die jeweilige Berechnungseinheit 20A, 20B ist angepasst zum Verarbeiten der von der Aufnahmeeinheit 10A, 10B aufgenommenen Bilddaten. Dazu verwendet die Berechnungseinheit 20A, 20B vorgegebene Bildparameter, wie beispielsweise die Auflösung, den Kontrast, die Farbsättigung, -temperatur und -töne, die Belichtung, etc., und ändert diese oder andere Parameter, insbesondere zum Zweck der Optimierung des auf der Wiedergabeeinheit 30A, 30B dargestellten Bilds.

Die jeweilige Wiedergabeeinheit 30A, 30B ist angepasst zum Anzeigen von Bildern, die von der jeweiligen Aufnahmeeinheit 10A, 10B aufgenommen und von der jeweiligen Berechnungseinheit 20A, 20B verarbeitet wurden. Die Wiedergabeeinheit 30A, 30B kann ein Monitor, wie beispielsweise ein LCD-, TFT- oder LED-Monitor, sein. Es können mehrere Wiedergabeeinheiten 30A, 30B pro Sichtsystem 100A, 100B vorgesehen sein. Die Wiedergabeeinheiten 30A, 30B sind vorzugsweise im Inneren einer Fahrerkabine eines Fahrzeugs installiert, weiter vorzugsweise an einer oder beiden A-Säulen eines Fahrzeugs, so dass sie während der Fahrt ungehindert von einem Fahrer eingesehen werden können.

Fig. 2a zeigt eine Draufsicht auf ein Nutzfahrzeug 1. Vorliegend ist das Nutzfahrzeug 1 ein Lastkraftwagen (LKW), der eine Zugmaschine und einen Auflieger oder einen Anhänger aufweist. An einer in Fahrtrichtung des LKW nach vorne linken und rechten Seite der Fahrerkabine der Zugmaschine ist jeweils eine der Kameras 10A, 10B angebracht. Wie in Fig. 2a zu sehen ist, nimmt die Kamera 10A einen in Fahrtrichtung des LKW betrachtet rechts neben dem hinteren Teil der Zugmaschine und neben dem Anhänger bzw. Auflieger liegenden Umgebungsbereich auf. Wenn auch nicht in Fig. 2a gezeigt, ist die Kamera 10B in Übereinstimmung mit der Kamera 10A dazu ausgebildet, einen sich in Fahrtrichtung des LKW betrachtet links neben dem hinteren Teil der Zugmaschine und neben dem Anhänger bzw. Auflieger liegenden Umgebungsbereich aufzunehmen. Der jeweilige rechte und linke Umgebungsbereich wird von der jeweiligen Kamera 10A, 10B mit einem ersten Sichtwinkel γ1 aufgenommen, wobei in Fig. 2a die Projektion γ1^{∗} des Sichtwinkels zu sehen ist, die sich horizontal, d.h. in etwa parallel zu einer ebenen Fahrbahnoberfläche aufspannt.

Rechts neben dem Anhänger des LKW befinden sich vier Objekte 40, 50, 60, 70. Die Objekte 40, 50, 60 und 70 liegen innerhalb der Projektion γ1^{∗} des ersten Sichtwinkels der Kamera 10A und werden somit von der Kamera 10A erfasst. Die Objekte 40, 50, 60 und 70 können beispielsweise jeweils ein Hindernis in Form eines Gegenstands, wie eines weiteren Fahrzeugs oder eines Pollers, oder einer Person sein. Die Objekte 40 und 50 bzw. die Objekte 60 und 70 liegen jeweils auf einem Kreisbogen, dessen Mittelpunkt sich an der Position der Kamera 10A befindet. Mit anderen Worten weisen die Objekte 40 und 50 bzw. die Objekte 60 und 70 denselben Abstand (Radius) zu der Kamera auf. Die Objekte 40 und 60 liegen dabei näher an dem Fahrzeug 1 als die Objekte 50 und 70.

Bei der in Fig. 2a gezeigten Fahrsituation befinden sich die Objekte 40 und 60 in der Projektion α1^{∗} eines ersten Abbildungswinkels α1. Der erste Abbildungswinkel α1 entspricht einem Winkel, der kleiner als der erste Sichtwinkel γ1 der Kamera 10A ist, innerhalb des ersten Sichtwinkels γ1 liegt und dessen Bilddaten (aus den gesamten Bilddaten des Aufnahmewinkels γ1) dem Fahrer auf einer (in Fig. 2a nicht gezeigten) Wiedergabeeinrichtung angezeigt werden.

Fig. 2b zeigt eine Seitenansicht des LKW aus Fig. 2a. Wie in Fig. 2b zu sehen ist, erstreckt sich der Aufnahmebereich der Kamera 10B (wie auch der Aufnahmebereich der Kamera 10A) nicht nur horizontal nach hinten, sondern auch schräg nach hinten unten, so dass Fig. 2b jeweils eine Projektion γ2^{∗} eines zweiten Sichtwinkels γ2 der Kameras 10A, 10B zeigt. Der zweite Sichtwinkel γ2 erstreckt sich senkrecht zu der Ebene, in der der erste Sichtwinkel γ1 der Kamera 10A liegt, und weitet sich nach hinten auf. Durch den ersten und zweiten Sichtwinkel γ1 und γ2 spannt jeder der Kameras 10A, 10B jeweils einen Aufnahmekegel auf, der sich ausgehend von der jeweiligen Kamera 10A, 10B nach hinten unten aufweitet.

Wie in Fig. 2b ferner zu sehen ist, liegen die Objekte 40, 50, 60 und 70 (Objekte 60 und 70 in Fig. 2b nicht gezeigt) innerhalb des zweiten Sichtwinkels γ2 der Kamera 10A und befinden sich genauer in einem zweiten Abbildungswinkel α2, der einem Winkel entspricht, der kleiner als der zweite Sichtwinkel γ2 der Kamera 10A ist, innerhalb des zweiten Sichtwinkels γ2 liegt und dessen Bilddaten (aus den gesamten Bilddaten des Sichtwinkels γ2) dem Fahrer auf einer (in Fig. 2b nicht gezeigten) Wiedergabeeinrichtung angezeigt werden.

Wie Fig. 2a und 2b zu entnehmen ist, weisen die Objekte 40, 50, 60 und 70 als Beispiel eine in etwa zylindrische Form auf, deren Längsachse in einer Richtung in etwa senkrecht zu der Fahrbahnoberfläche verläuft, und sind gleich groß zu Erläuterungszwecken angenommen.

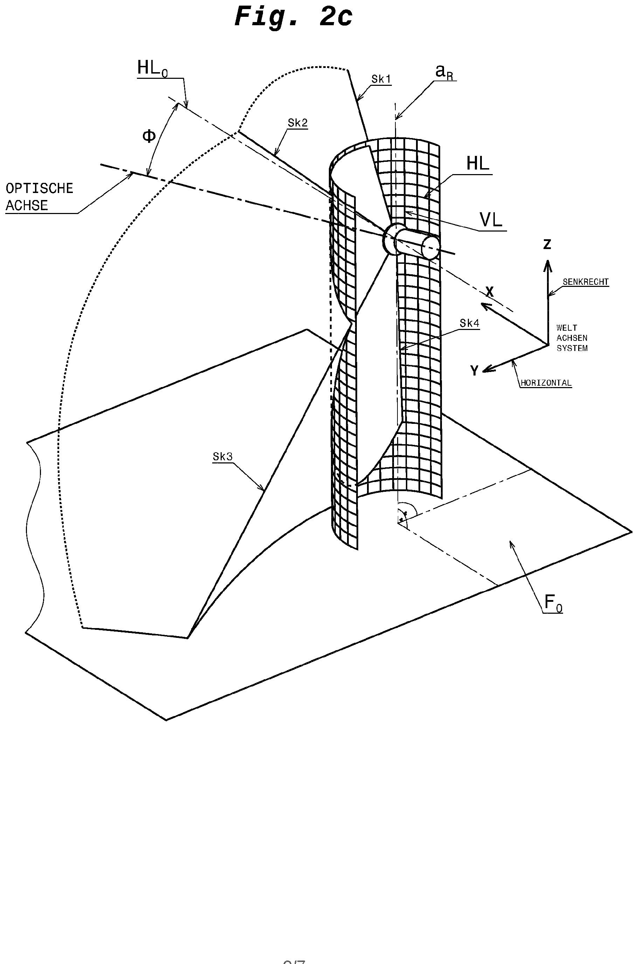

In Fig. 2c ist beispielhaft ein dreidimensionales Sichtfeld einer Kamera, wie z.B. der Kamera 10A oder 10 B aus Fig. 1a bzw. 1b, in einem Weltachsensystem (Koordinatensystem X-Y-Z) gezeigt. Die Kamera nimmt ein dreidimensionales Sichtfeld auf, das durch Sichtfeldkanten Sk1, Sk2, Sk3 und Sk4 begrenzt ist. Die optische Achse der Kamera verläuft schräg nach unten, wenn die Fahrbahnoberfläche FO als Referenzfläche angenommen wird. Genauer verläuft die optische Achse in einem Neigungswinkel Φ zu der horizontalen Linie HLo, die durch den ersten Hauptpunkt der Optik verläuft.

Wie in Fig. 2c gezeigt ist, werden die Bilddaten, wie beispielsweise die Umgebung eines Fahrzeugs, von der Kamera in Form eines imaginären zylindrischen Gittermusters aufgenommenen. Das zylindrische Gittermuster weist vertikale Netzlinien VL und zu den vertikalen Netzlinien senkrecht verlaufende horizontale Netzlinien HL auf. Die horizontale Linie HL_{O}, die durch den ersten Hauptpunkt der Optik verläuft, weist einen Schnittpunkt mit einer Rotationsachse a_{R} des Gittermusters auf, die in vertikaler Richtung Z durch den Mittelpunkt der Zylinderquerschnittsfläche verläuft.

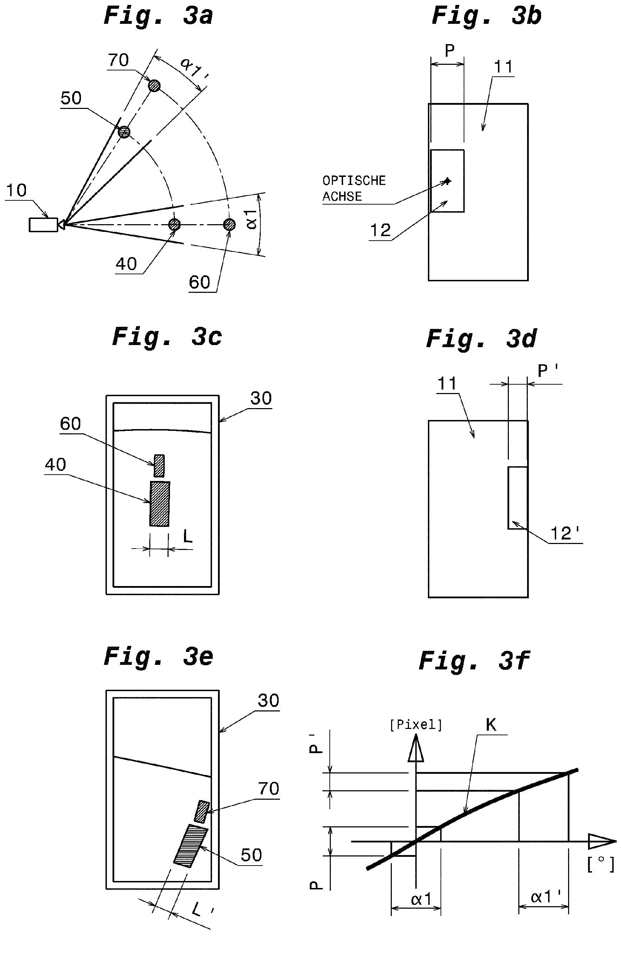

Fig. 3a zeigt eine Draufsicht auf eine Kamera 10 des erfindungsgemäßen Sichtsystems ähnlich Fig. 2a. Im Unterschied zu Fig. 2a sind bei dem in Fig. 3a gezeigten Szenario der Fahrzeugumgebung nicht nur die Objekte 40 und 60 in einem ersten Abbildungswinkel α1 der Kamera 10 angeordnet, sondern auch die Objekte 50 und 70 sind in einem ersten Abbildungswinkel α1' der Kamera 10 angeordnet. Die ersten Abbildungswinkel α1 und α1' sind in etwa gleich groß, d.h. sie weisen in etwa die gleiche Winkelerstreckung auf. Die ersten Abbildungswinkel α1 und α1' liegen beiden innerhalb des ersten Sichtwinkels γ1 (nicht gezeigt) der Kamera 10.

Fig. 3b zeigt einen Bildsensor 11 des erfindungsgemäßen Sichtsystems. Der Bildsensor 11 weist eine rechteckige Form mit einer längeren Erstreckung in einer Oben-Unten-Richtung als in einer Rechts-Links-Richtung der Fig. 3b auf. In der Nähe des in Fig. 3b linken Rands des Bildsensors 11 ist ein erster Teilbereich 12 als Entnahmebereich definiert. Wie in Fig. 3b gezeigt ist, enthält der Teilbereich 12 die Abbildung der optischen Achse der Kamera 10. Der erste Teilbereich 12 weist eine rechteckige Form auf, deren Längserstreckung in einer Oben-Unten-Richtung in Fig. 3b und deren Breitenerstreckung in einer Links-Rechts-Richtung in Fig. 3b verläuft. Der erste Teilbereich 12 weist eine Breite P in der Breitenerstreckung auf. Der erste Teilbereich 12 entspricht den Bilddaten, die sich in dem Abbildungswinkel α1 befinden und kann beispielsweise das Sichtfeld eines Hauptspiegels oder eines Weitwinkelspiegels (z.B. die Sichtfelder II und IV wie in der ECE R 46 definiert) enthalten. Ein solcher, in der Nähe der Abbildung der optischen Achse liegender Teilbereich 12, in welchem vorzugsweise die Verzeichnung gering ist, da er sich wie hier z.B. in der Nähe der Abbildung der optischen Achse befindet, kann ein Referenzteilbereich sein.

Fig. 3c zeigt einen Monitor 30 (Bildwiedergabeeinheit) des erfindungsgemäßen Sichtsystems. Der Monitor 30 weist eine rechteckige Form mit einer längeren Erstreckung in einer Oben-Unten-Richtung als in einer Rechts-Links-Richtung der Fig. 3c auf. Der Monitor 30 bildet den ersten Teilbereich 12 ab bzw. es wird der erste Teilbereich 12 auf dem Monitor 30 dargestellt. Dabei entspricht die Abbildungsfläche des Monitors 30 im Wesentlichen der Fläche des Teilbereichs 12. Auf dem Monitor 30 sind die Bilddaten der Fahrzeugumgebung wiedergegeben, die sich in dem Abbildungswinkel α1 und damit dem ersten Teilbereich 12 befinden. Insbesondere sind auf dem Monitor 30 die Objekte 40 und 60 wiedergegeben.

Wie in Fig. 3c zu sehen ist, sind die Objekte 40 und 60 nahezu verzeichnungsfrei auf dem Monitor 30 wiedergegeben und weisen lediglich unterschiedliche Größen in der Darstellung auf, da sie sich in der Fahrzeugumgebung in verschiedenen Entfernungen zur Kamera 10 befinden. Genauer befindet sich das Objekt 40 näher an der Kamera 10 als das Objekt 60, weswegen es auf dem Monitor 30 größer dargestellt ist als das Objekt 60, und das Objekt 60 befindet sich weiter entfernt von der Kamera 10 als das Objekt 40, weswegen es auf dem Monitor 30 kleiner dargestellt ist als das Objekt 40. Da der Fahrer in der Fahrzeugumgebung Objekte in unterschiedlichen Entfernungen auch in unterschiedlichen Größen (je weiter entfernt von dem Fahrer, desto kleiner) wahrnimmt, entsteht so eine für den Fahrer realistische Wiedergabe der Fahrzeugumgebung. Das Objekt 40 weist eine Breite L auf, die sich in einer Links-Rechts-Richtung auf dem Monitor 30 erstreckt. Die nahezu verzeichnungsfreie Wiedergabe der Objekte 40 und 60 begründet sich darin, dass sich die Objekte 40 und 60 unmittelbar auf dem Verzeichnungszentrum bzw. in dessen unmittelbarer Nähe befinden, hier der optischen Achse der Kamera 10 bzw. des optischen Elements (nicht gezeigt), wo das Verzeichnungsverhalten des optischen Elements, die vorliegend tonnenförmig ist, sehr gering ist. An der Position des ersten Teilbereichs 12 auf dem Bildsensor 11 ist somit keine Kompensation des Verzeichnungsverhaltens des optischen Elements erforderlich und die Objekte 40 und 60 können, was die Kompensation der Verzeichnung anbelangt, unverändert auf dem Monitor 30 dargestellt werden. Gleiches kann auch noch zutreffen, wenn der dem Bildsensor 11 entnommene Teilbereich das Verzeichnungszentrum zwar nicht enthält, jedoch unmittelbar an diese angrenzt und/oder dieses berührt. Die Größenverhältnisse der Höhe zur Breite der Objekte 40 und 60 auf dem Monitor 30 entsprechen in etwa den Größenverhältnissen der Höhe zur Breite der Objekte 40 und 60 in Realität.

Fig. 3d zeigt erneut den Bildsensor 11 aus Fig. 3b. Im Unterschied zu Fig. 3b ist in Fig. 3d nahe des rechten Rands des Bildsensors 11 ist ein anderer, zweiter Teilbereich 12' definiert, der sich in einer anderen Position auf dem Bildsensor 11 als der Teilbereich 12 befindet. Der Teilbereich 12' enthält nicht die Abbildung der optischen Achse der Kamera 10, sondern ist vielmehr von der optischen Achse bzw. vom Verzeichnungszentrum entfernt angeordnet. Wie der erste Teilbereich 12 weist auch der zweite Teilbereich 12' eine rechteckige Form auf, deren Längserstreckung in einer Oben-Unten-Richtung in Fig. 3d und deren Breitenerstreckung in einer Links-Rechts-Richtung in Fig. 3d verläuft. Der zweite Teilbereich 12' weist eine gegenüber der Breite P des ersten Teilbereichs 12 veränderte Breite P' in der Breitenerstreckung auf. Der zweite Teilbereich 12' entspricht den Bilddaten, die sich in dem Abbildungswinkel α1' befinden und kann ebenfalls das Sichtfeld eines Hauptspiegels oder eines Weitwinkelspiegels (z.B. die Sichtfelder II und IV wie in der ECE R 46 definiert) enthalten.

Fig. 3e zeigt erneut den Monitor 30 aus Fig. 3c. Der Monitor 30 gibt nunmehr den zweiten Teilbereich 12' wieder. Dabei entspricht die Abbildungsfläche des Monitors 30 wieder in etwa der Fläche des Teilbereichs 12'. Auf dem Monitor 30 sind die Bilddaten der Fahrzeugumgebung wiedergegeben, die sich in dem Abbildungswinkel α1' und damit dem ersten Teilbereich 12' befinden. Insbesondere sind auf dem Monitor 30 die Objekte 50 und 70 wiedergegeben.

Bevorzugt ist nur ein Monitor 30 für jede Fahrzeugseite vorgesehen. Um die verschiedenen Teilbereich 12 und 12' zu sehen, kann der Fahrer entweder manuell von einer Ansicht, die den Teilbereich 12 zeigt, zu einer Ansicht wechseln, die den Teilbereich 12' zeigt oder der Wechsel der Ansichten erfolgt fahrsituationsbedingt. Alternativ können aber auch mehr als ein Monitor 30 für jede Fahrzeugseite vorgesehen sein. D.h. es können z.B. zwei Monitore 30 vorgesehen sein, von denen der erste Monitor 30 den Teilbereich 12 und der zweite Monitor (nicht gezeigt) den Teilbereich 12' anzeigt.

Wie in Fig. 3e zu sehen ist, weisen die Objekte 50 und 70 unterschiedliche Größen auf, da sie sich in der Fahrzeugumgebung in verschiedenen Entfernungen zur Kamera 10 befinden. Genauer befindet sich das Objekt 50 näher an der Kamera 10 das Objekt 70, weswegen es auf dem Monitor 30 größer dargestellt ist als das Objekt 70, und das Objekt 70 befindet sich weiter entfernt von der Kamera 10 als das Objekt 50, weswegen es auf dem Monitor 30 kleiner dargestellt ist als das Objekt 50, was zu einer realistischen Wiedergabe der Fahrzeugumgebung für den Fahrer führt. Die Größenverhältnisse der Objekte 50 und 70, d.h. die Breite und die Höhe der Objekte 50 bzw. 70, auf dem Monitor 30 entsprechen bei im Wesentlichen verzeichnungsfreier Darstellung in etwa den Größenverhältnissen der Objekte 50 und 70, d.h. der Breite und der Höhe der Objekte 50 bzw. 70, in Realität.

Die Objekte 50 und 70 sind auf dem Monitor 30 aus Fig. 3e nahezu verzeichnungsfrei, d.h. in in etwa gleicher Größe und Form wie die Objekte 40, 60, wiedergegeben. Die nahezu verzeichnungsfreie Wiedergabe der Objekte 50 und 70 begründet sich darin, dass der Teilbereich 12' eine gegenüber dem Teilbereich 12 veränderte Geometrie aufweist. Genauer weist der Teilbereich 12' eine geringere Breite P' als die Breite P des Teilbereichs 12 auf. Die Reduzierung der Breite P des Teilbereichs 12, wenn auf oder nahe der Abbildung der optischen Achse als Verzeichnungszentrum dem Bildsensor 11 entnommen, zu einer Breite P' des Teilbereichs 12' dient der Kompensation des Verzeichnungsverhaltens des optischen Elements. Mit anderen Worten kann das Verzeichnungsverhalten eines optischen Elements kompensiert oder wenigstens reduziert werden, dadurch dass die Geometrie, z.B. wenigstens eine Seitenlänge, des dem Bildsensor 11 entnommenen Teilbereichs 12' abhängig von der Entnahmeposition gegenüber der Geometrie eines Teilbereichs 12, der sich auf oder nahe der Abbildung der optischen Achse als Verzeichnungszentrum dem Bildsensor 11, oder in einem anderen Bereich des Bildsensors 11 allgemein, befindet, verändert wird. Abhängig von der Art des Verzeichnungsverhaltens des optischen Elements ist dabei z.B. eine Verkleinerung oder eine Vergrößerung der Geometrie des Teilbereichs 12 erforderlich. Die Breite des auf dem Monitor dargestellten Objekts 50 weist eine Breite L' auf, die sich im Wesentlichen in einer Links-Rechts-Richtung auf dem Monitor 30 erstreckt, und die Größenverhältnisse des Objekts 50 und des Objekts 40 auf dem Monitor 30 sind bei im Wesentlicher verzeichnungsfreier Darstellung in etwa gleich den Größenverhältnissen des Objekts 50 und des Objekts 40 in Realität.

In Fig. 3f ist die Kompensationskurve K der Kamera 10 bzw. des optischen Elements (nicht gezeigt) der Kamera 10 in einem Diagramm gezeigt. In dem Diagramm ist auf der Abszisse eine Winkelerstreckung in Grad [°] und auf der Ordinate die Längenerstreckung in Pixeln aufgetragen. Die Kompensationskurve K ist eine Kurve, die durch den Koordinatenursprung (der das Verzeichnungszentrum, wie z.B. die optische Achse, darstellt) verläuft und sich nicht-linear nach rechts oben in Fig. 3f erstreckt, wobei sich ihr Verlauf mit zunehmendem Abstand von dem Koordinatenursprung leicht abflacht. In Fig. 3f entspricht die Kompensationskurve K der Verzeichnungskurve des optischen Elements. Es ist aber auch denkbar, dass die Kompensationskurve K einer frei definierten Kurve entspricht, die empirisch ermittelt und in der Bearbeitungseinheit 20A, 20B gespeichert wird. Alternativ kann die Kompensationskurve wenigstens einer mathematischen Funktion entsprechen.

Die Kompensationskurve K wird von der Bildbearbeitungseinheit 20A, 20B zur Bestimmung der Breiten P, P' der Teilbereiche 12, 12' auf dem Bildsensor 11 abhängig von einer Lageänderung der dem Teilbereich 12, 12' entsprechenden Abbildungswinkels α1, α1' der Kamera 10 genutzt. Mit anderen Worten kann die Bildbearbeitungseinheit 20A, 20B über die Kompensationskurve K bestimmen, welche Breite P, P' der dem Bildsensor 11 entnommene Teilbereich 12, 12' abhängig von der Verschiebung des entsprechenden Abbildungswinkels α, α1' und damit abhängig von der Lange auf dem Bildsensor 11 aufweist. Bei der in Fig. 3f gezeigten Kompensation der Fahrzeugumgebung handelt es sich um eine Kompensation in einer ersten Raumrichtung, die vorliegend einer horizontalen Raumrichtung parallel zur Fahrbahnoberfläche entspricht.

In das Diagramm aus Fig. 3f sind die Winkel α, α1' aus Fig. 3a und die Breitenabmaße P, P' der Teilbereiche 12, 12' aus Fig. 3b und 3d aufgetragen. Um eine Verzeichnung zu kompensieren, ist die Geometrie der Teilbereiche 12, 12' somit abhängig davon, wo diese der Bildsensorfläche entnommen werden. Die Geometrien der Teilbereiche 12, 12' unterscheiden sich folglich voneinander. Wie in Fig. 3f zu sehen ist, nimmt die Breite P, P' der Teilbereiche 12, 12' beispielsweise mit zunehmender Winkelerstreckung ab, während die Winkel α1, α1' gleich bleiben. Es ist aber auch denkbar, dass sich die Winkel α1, α1' je nach Position des Teilbereichs 12, 12' ebenfalls geringfügig ändern, woraufhin sich die entsprechende Breite P, P' des jeweiligen Teilbereichs 12, 12' zwar auch ändert, jedoch nicht in dem Maße, wie wenn die Winkel α1, α1' keine Änderung erfahren.

Wie in Fig. 3c und 3e zu sehen ist, sind die Objekte 40 und 60 bzw. die Objekte 50 und 70 kaum oder lediglich geringfügig verzeichnet auf dem Monitor 30 dargestellt. Durch die kaum oder nur geringfügig verzeichnete Darstellung der Objekte 40 und 60 bzw. 50 und 70 auf dem Monitor 30 kann der Fahrer die Größe der Objekte 40 und 60 bzw. 50 und 70 sowie deren Lage und Orientierung in der Fahrzeugumgebung gut erkennen. Der Fahrer kann daher zuverlässig beurteilen, ob der LKW bei dem geplanten Fahrmanöver mit einem oder mehreren der Objekte 40, 50, 60 und 70 kollidiert oder nicht.

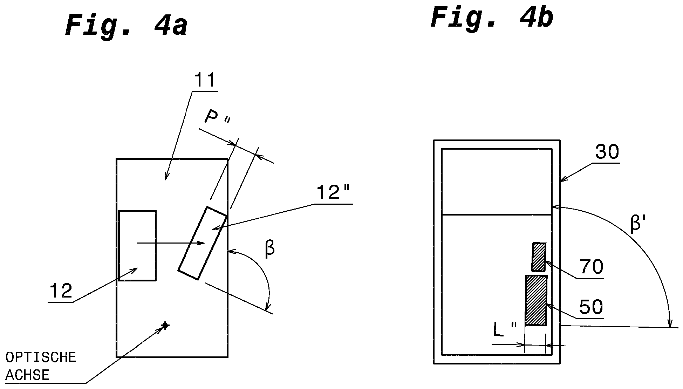

Fig. 4a zeigt erneut den Bildsensor 11 aus Fig. 3b. Dem Bildsensor 11 ist ein Teilbereich 12" entnommen, der im Wesentlichen dem Teilbereich 12' aus Fig. 3d entspricht. Insbesondere entspricht die Breite P" der Breite P' des Teilbereichs 12' aus Fig. 3d. In Fig. 4a ist jedoch die Lage des Teilbereichs 12" gegenüber der Lage des Teilbereichs 12' aus Fig. 3d verändert. Genauer ist der Teilbereich 12" in Fig. 4a gegenüber dem Teilbereich 12' nach rechts gekippt bzw. gedreht, so dass der obere Rand des Teilbereichs 12", der in Breitenrichtung des Teilbereichs 12" verläuft, einen Ausrichtungswinkel β zum Rand des Bildsensors 11 aufweist, der größer als 90° ist. Mit anderen Worten erstreckt sich bei dem Teilbereich 12" die Längsachse nicht in einer Oben-Unten-Richtung wie in Fig. 3d, sondern erstreckt sich in Fig. 4a winklig zur der Oben-Unten-Richtung und sind die Begrenzungen des Teilbereichs 12" nicht parallel zu denen des ebenfalls rechteckigen Bildsensors 11.

Fig. 4b zeigt den Monitor 30 des erfindungsgemäßen Sichtsystems, der im Wesentlichen dem Monitor aus Fig. 3c und 3e entspricht und den Teilbereich 12" wiedergibt. Wie in Fig. 4b zu sehen ist, sind die Objekte 50 und 70, die sich in dem Teilbereich 12" befinden, gegenüber ihrer Wiedergabe in Fig. 3e weiter bzw. stärker unverzerrt bzw. verzeichnungsfrei dargestellt, so dass ihre Längsachsen in einer Oben-Unten-Richtung in Fig. 4b im Wesentlichen parallel zu dem Längsrand des Monitors 30 verlaufen. Die Breiten der Objekte 50 bzw. 70 verlaufen somit auf dem Monitor 30 aus Fig. 4b in einer Links-Rechts-Richtung, so dass der Anordnungswinkel β' in etwa senkrecht zu dem Längsrand des Monitors 30 verläuft. Das Objekt 50 weist eine Breite L" auf, die sich in einer Links-Rechts-Richtung auf dem Monitor 30 erstreckt.

Durch die zusätzliche Verdrehung des Teilbereichs 12" gegenüber der Lage des Teilbereichs 12' kann die Verzerrung bzw. Verzeichnung der Objekte 50 und 70 weiter reduziert werden bzw. gänzlich eliminiert werden. Durch die verzeichnungsfreie Darstellung der Objekte 50 und 70 auf dem Monitor 30 kann der Fahrer die Größe der Objekte 50 und 70 sowie deren Lage und Orientierung in der Fahrzeugumgebung gut erkennen. Der Fahrer kann daher noch zuverlässiger beurteilen, ob der LKW bei dem geplanten Fahrmanöver mit dem Objekt 50 und/oder dem Objekt 70 kollidiert oder nicht.

Bei den Monitordarstellungen in Fig. 3c, 3e und 4b gilt, dass die Verhältnisse der Breitenabmaße L, L' und L" der Objekte 40 und 50 jeweils im Wesentlichen mit den Verhältnissen der Breitenabmaße der Objekte 40 und 50 in der Realität übereinstimmen.

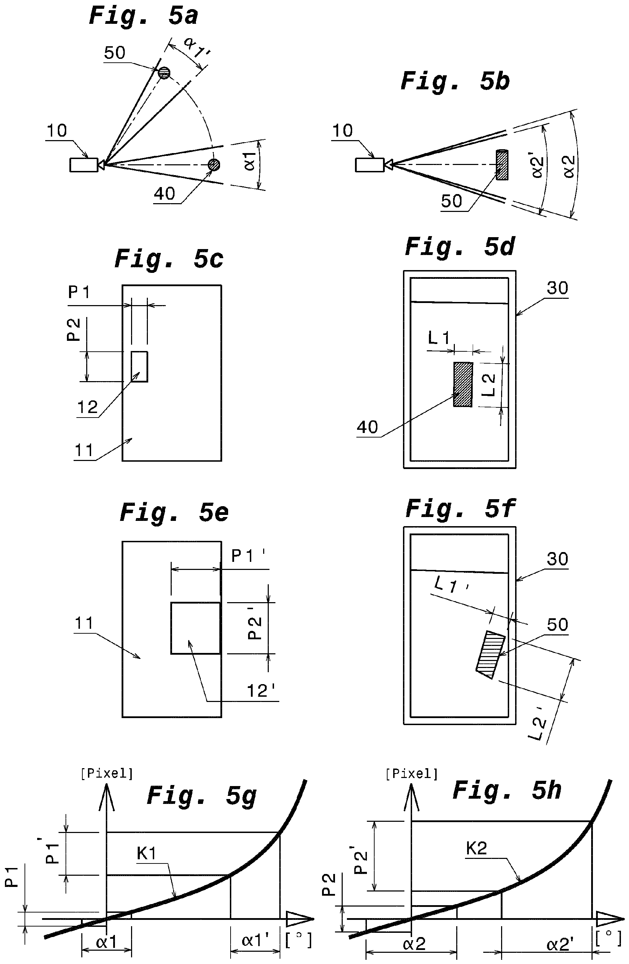

Fig. 5a bis 5h zeigen eine Kompensation des Verzeichnungsverhaltens der Kamera 10 in zwei Raumrichtungen. Eine erste Raumrichtung entspricht einer ersten Raumrichtung (siehe die Aufnahmerichtung der Kamera 10A aus Fig. 2a) und eine zweite Raumrichtung entspricht einer zweiten zur ersten Raumrichtung im Wesentlichen senkrechten Raumrichtung (siehe die Aufnahmerichtung der Kamera 10B aus Fig. 2b).

Die in Fig. 5a gezeigte Fahrsituation entspricht im Wesentlichen der in Fig. 3a gezeigten Fahrsituation und entspricht damit einer Draufsicht auf eine an einem Fahrzeug (nicht gezeigt) angebrachte Kamera 10 (entsprechend der Ansicht in Fig. 2a). Im Unterschied zu der in Fig. 3a gezeigten Fahrsituation befinden sich lediglich die Objekte 40 und 50 in dem Sichtwinkel γ1 der Kamera 10. Das Objekt 40 liegt nahe dem Verzeichnungszentrum, während das Objekt 50 dazu beabstandet ist.

Fig. 5b zeigt ebenfalls die Fahrsituation aus Fig. 5a, nur aus einer anderen Perspektive. Genauer zeigt Fig. 5b eine Seitenansicht der Kamera 10 und damit eine Seitenansicht der Objekte 40 und 50 (entsprechend der Ansicht in Fig. 2b, Objekt 40 nicht zu sehen). Dabei befindet sich das Objekt 40 in einem Abbildungswinkel a2 und das Objekt 50 in einem Abbildungswinkel α2'. Die Abbildungswinkel α2 und α2' sind kleiner als der Sichtwinkel γ2 (nicht gezeigt) und liegen innerhalb des Sichtwinkels γ2.

Fig. 5c zeigt einen Bildsensor 11 ähnlich dem Bildsensor aus Fig. 3b. Auf dem Bildsensor 11 ist ein Teilbereich 12 definiert. Die Bilddaten des Teilbereichs 12 entsprechen den Bilddaten der Abbildungswinkel α1 und α2, die jeweils das Objekt 40 enthalten. Der Teilbereich 12 weist eine Breite P1 in einer Links-Rechts-Richtung in Fig. 5c, die sich aus den Bilddaten des Abbildungswinkels α1 in der ersten Raumrichtung ergibt, und eine Länge P2 in einer Oben-Unten-Richtung in Fig. 5c auf, die sich aus den Bilddaten des Abbildungswinkels a2 in der zweiten Raumrichtung ergibt. Der Teilbereich 12 kann wiederum als Referenzteilbereich 12 mit im Wesentlichen verzeichnungsfreier Abbildung angesehen werden.

Fig. 5d zeigt einen Monitor 30, der in Wesentlichen einen Aufbau wie der Monitor aus Fig. 3c aufweist und dessen Monitorfläche im Wesentlichen dem Teilbereich 12 entspricht. Das auf dem Monitor 30 gezeigte Objekt 40 ist im Wesentlichen unverzerrt dargestellt, weil es sich nahe des Verzeichnungszentrums der Kamera 10 befindet, und weist eine Breite L1 und eine Länge L2 auf, deren Verhältnis in etwa dem tatsächlichen Verhältnis der Breite und Höhe des Objekts 40 in der Fahrzeugumgebung entspricht.

Fig. 5e zeigt erneut den Bildsensor 11 aus Fig. 5c. Auf dem Bildsensor 11 ist ein Teilbereich 12' definiert. Die Bilddaten des Teilbereichs 12' entsprechen den Bilddaten der Abbildungswinkel α1' und α2', die jeweils das Objekt 50 enthalten. Der Teilbereich 12' weist eine Breite P1' in einer Links-Rechts-Richtung in Fig. 5e und eine Länge P2' in einer Oben-Unten-Richtung in Fig. 5e auf, die sich jeweils aus den Bilddaten der zwei Abbildungswinkeln α1' und α2' ergeben. Sowohl die Breite P1' als auch die Länge P2' des Teilbereichs 12' sind gegenüber der der Breite P1 als auch der Länge P2 des Teilbereichs 12 aus Fig. 5c verändert, weil der Teilbereich 12' an einer anderen Position dem Bildsensor 11 entnommen ist als der Teilbereich 12. Durch die Veränderung der Breite bzw. der Länge des Teilbereichs 12 abhängig von dessen Position auf dem Bildsensor 11, d.h. einer Anpassung der Geometrie des Teilbereichs 12 in zwei Raumrichtungen, kann das Verzeichnungsverhalten der Kamera 10, die mit zunehmender Entfernung von dem Verzeichnungszentrum zunimmt, noch besser kompensiert werden als wenn lediglich eine Kompensation in einer Raumrichtung erfolgt.

Die Fig. 5f zeigt einen Monitor 30, der in Wesentlichen einen Aufbau wie der Monitor aus Fig. 3c aufweist und dessen Monitorfläche im Wesentlichen dem Teilbereich 12' entspricht. Das auf dem Monitor 30 gezeigte Objekt 50 ist - obwohl entfernt vom Verzeichnungszentrum der Kamera 10 angeordnet - im Wesentlichen unverzerrt dargestellt und weist eine Breite L1' und eine Länge L2' auf, deren Verhältnis in etwa dem tatsächlichen Verhältnis des Objekts 40 in der Fahrzeugumgebung entspricht. Die nahezu verzeichnungsfreie Darstellung des Objekts 50 kann durch Anpassung der Geometrie des Teilbereichs 12' gegenüber der Geometrie des Teilbereichs 12 bewirkt werden. Das Ausmaß bzw. der Grad der Anpassung hängt von der Position des Teilbereichs 12' ab und hängt genauer von der Entfernung des Teilbereichs 12 von der Abbildung des Verzeichnungszentrums auf dem Bildsensor 11 ab. Durch Veränderung der Geometrie des Teilbereichs 12' abhängig von der Entnahmeposition des Teilbereichs 12' auf dem Bildsensor 11 kann das Verzeichnungsverhalten der Kamera, die vorliegend kissenförmig ist, kompensiert oder wenigstens reduziert werden. Wenn auch nicht gezeigt, so ist ähnlich der Modifizierung der ersten Ausführungsform in Fig. 4a und Fig. 4b auch eine Lageänderung des Teilbereichs 12', z.B. eine Drehung, gegenüber der Lage des Teilbereichs 12 denkbar.

Die Kompensation der Verzeichnung ist in Fig. 5g und 5h zu sehen. In Fig. 5g und 5h sind die Kompensationskurven K1 bzw. K2 der Kamera 10 jeweils in einem Diagramm gezeigt. Wie bei der Kompensationskurve K aus Fig. 3f ist in den Diagrammen aus Fig. 5g und 5h jeweils auf der Abszisse eine Winkelerstreckung in Grad [°] und auf der Ordinate die Längenerstreckung in Pixeln aufgetragen. Die Kompensationskurven K1 und K2 sind Kurven, die durch den Koordinatenursprung (der das Verzeichnungszentrum darstellt) verlaufen und sich jeweils nicht-linear nach rechts oben in Fig. 5g und 5h erstreckt, wobei ihr Verlauf mit zunehmendem Abstand von dem Koordinatenursprung stark ansteigt, da die Kamera 10 eine kissenförmige Verzeichnung aufweist. In Fig. 5g und 5h entsprechen die Kompensationskurven K1 und K2 den Verzeichnungskurven der optischen Elemente in der jeweiligen Raumrichtung. Die in Fig. 5g gezeigte Kompensationskurve K1 entspricht dem Verzeichnungsverhalten der Kamera 10 in der ersten horizontalen Raumrichtung, während die in Fig. 5h gezeigte Kompensationskurve K2 dem Verzeichnungsverhalten der Kamera 10 in der zweiten vertikalen Raumrichtung entspricht.

Die Kompensationskurven K1, K2 werden zur Bestimmung der Breiten P1, P1' der Teilbereiche 12, 12' auf dem Bildsensor 11 abhängig von einer Lageänderung des dem Teilbereich 12, 12' entsprechenden Abbildungswinkels α1, α1', α2, α2' der Kamera 10 genutzt, so dass beide Teilbereiche 12, 12' unverzerrt oder nahezu unverzerrt auf dem Monitor 30 angezeigt werden können. Mit anderen Worten kann die Bildbearbeitungseinheit 20A, 20B über die jeweilige Kompensationskurve K1, K2 bestimmen, welche Breite P1, P1' und welche Länge P2, P2' der jeweilige dem Bildsensor 11 entnommene Teilbereich 12, 12' abhängig von der Verschiebung des entsprechenden Abbildungswinkels α1, α1' bzw. α2, α2' und damit abhängig von der Lange des jeweiligen Teilbereichs 12, 12' auf dem Bildsensor 11 aufweist.

In die Diagramme aus Fig. 5g und 5h sind die Winkel α1, α1' bzw. α2, α2' aus Fig. 5a und 5b sowie die Breitenabmaße P1, P1' und die Längenabmaße P2, P2' der Teilbereiche 12, 12' aus Fig. 5c und 5e aufgetragen. Wie in Fig. 5g zu sehen ist, nimmt die Breite P1, P1' des Teilbereichs 12, 12' in der ersten Raumrichtung mit zunehmender Winkelerstreckung zu, während die Winkel α1, α1' gleich bleiben. Wie in Fig. 5h zu sehen ist, nimmt die Breite P2, P2' des Teilbereichs 12, 12' in der zweiten Raumrichtung ebenfalls mit zunehmender Winkelerstreckung zu, während die Winkel α2, α2' gleich bleiben. Wie mit Bezug auf Fig. 3f bereits erläutert, ist es aber auch denkbar, dass sich die Winkel α1, α1' und/oder α2, α2' je nach Position des jeweiligen Teilbereichs 12, 12' ebenfalls geringfügig ändern, woraufhin sich die entsprechende Breite P1, P1' und/oder P2/P2' des jeweiligen Teilbereichs 12, 12' sich zwar auch ändert, jedoch nicht in dem Maße wie wenn die Winkel α1, α1 und/oder α2, α2' keine Änderung erfahren.

Wie in Fig. 5d und 5f zu sehen ist, ist das Objekt 40 gar nicht und das Objekt 50 nur geringfügig verzeichnet auf dem Monitor 30 dargestellt. Durch die kaum oder nur geringfügig verzeichnete Darstellung der Objekte 40 und 50 auf dem Monitor 30 kann der Fahrer die Größe der Objekte 40 und 50 sowie deren Lage und Orientierung in der Fahrzeugumgebung gut erkennen. Der Fahrer kann daher zuverlässig beurteilen, ob der LKW bei dem geplanten Fahrmanöver mit dem Objekt 40 und/oder dem Objekt 50 kollidiert oder nicht. Dabei liefert eine Kompensation des Verzeichnungsverhaltens der Kamera 10 durch die Bildbearbeitungseinheit 20A, 20B in zwei Raumrichtungen eine noch verzeichnungsfreiere Darstellung von Objekten als eine Kompensation in lediglich einer Raumrichtung. Es sind daher auch Kompensationen in mehr als zwei Raumrichtungen denkbar, um Objekte noch verzeichnungsfreier darstellen zu können.

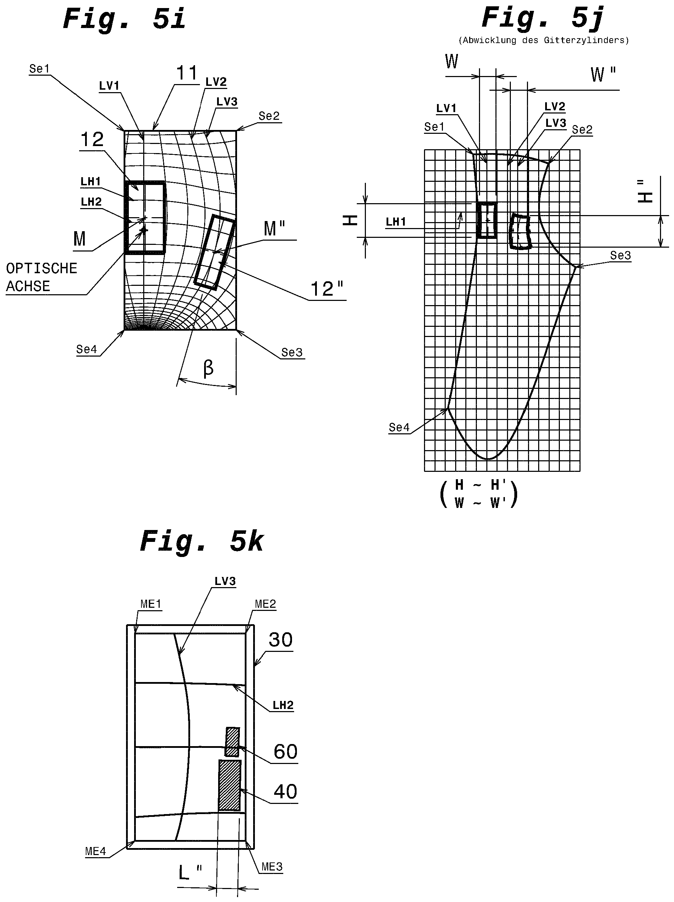

In Fig. 5i ist ein Bildsensor 11 gezeigt, auf dem ein Teilbereich 12 und ein Teilbereich 12" definiert ist. Der Teilbereich 12" entspricht einem dem Teilbereich 12' aus Fig. 5e gegenüber verdrehten Teilbereich. D.h. der Teilbereich 12" entspricht einem Teilbereich, der bereits geometrische an die Entnahmeposition angepasst ist und zusätzlich gegenüber dem vertikalen Rand des Bildsensors verdreht ist. Wie bereits mit Bezug auf Fig. 4a und 4b beschrieben, kann durch Anpassung der Geometrie eines dem Bildsensor entnommenen Teilbereichs und durch Verdrehung der angepassten Geometrie ein Verzeichnungsverhalten eines optischen Elements noch wirkungsvoller kompensiert werden.

Wie in Fig. 5i gezeigt ist, wird der von der Kamera 10 aufgenommene Gitterzylinder (siehe Fig. 2c) auf der Sensorfläche des Bildsensors 11 abgebildet. Durch das Verzeichnungsverhalten der Optik und die grundsätzlichen Regeln der Perspektive, verlaufen die vertikalen Linen VL aus Fig. 2c in Fig. 5i nicht parallel zu dem vertikalen Rand des Bildsensors 11, sondern sind als gebogene (virtuelle) Linien LV1, LV2, LV3, etc. (allgemein bezeichnet als LV) abgebildet. Ebenso verlaufen die horizontalen Linien HL aus Fig. 2c in Fig. 5i nicht parallel zu dem horizontalen Rand des Bildsensors, sondern sind als gebogene (virtuelle) Linien LH1, LH2, etc. (allgemein bezeichnet als LH) abgebildet. Die Biegung der Linien nimmt von dem Verzeichnungszentrum in Richtung Rand des Bildsensors zu. Der Teilbereich 12 liegt in einem Bereich auf dem Bildsensor, in dem die Ränder des Teilbereichs 12 nahezu parallel zu den vertikalen und horizontalen Linien des abgebildeten Gittermusters sind. Damit ist der Teilbereich 12 nahezu verzeichnungsfrei auf dem Sensor abgebildet. Der Teilbereich 12" liegt in einem Bereich auf dem Bildsensor, in dem die die vertikalen und horizontalen Linien des abgebildeten Gittermusters stark gekrümmt sind.

Würde die Geometrie des Teilbereichs 12 ohne Anpassung der Geometrie einem Bereich des Bildsensors entnommen werden, dessen vertikale Linien LV1, LV2, LV3 und horizontale Linien LH1, LH2 stark gekrümmt sind, würden die Bilddaten des Teilbereichs 12 auf dem Monitor stark verzeichnet wiedergegeben werden. Zum Kompensieren der Verzeichnung kann die Geometrie des Teilbereichs 12 (mit Mittelpunkt M), wie in Fig. 5a bis 5h gezeigt, an die Entnahmeposition auf dem Bildsensor angepasst werden, wenn an einer Stelle dem Bildsensor entnommen, an der die vertikale Linien LV1, LV2, LV3 und horizontale Linien LH1, LH2 stark gekrümmt sind. Die Verzeichnung kann noch besser kompensiert werden, wenn die Geometrie zusätzlich an den Verlauf bzw. die Krümmung der horizontalen Linien LH1, LH2 und der vertikalen Linien LV1, LV2, LV3 angepasst wird, d.h., wenn die Geometrie derart gegenüber der auf dem Bildsensor vertikalen Ausrichtung gedreht wird, so dass die Längsachse und die Querachse der Geometrie, die durch den Mittelpunkt M" der Geometrie laufen, tangential an einer jeweiligen gekrümmten horizontalen Linie LH und vertikalen Linie LV anliegen. Der Verdrehwinkel, mit dem der Teilbereich 12" gegenüber der vertikalen Ausrichtung des Sensorrands verdreht ist, wird mit β bezeichnet.

Die Ermittlung des Verdrehwinkels β erfolgt über ein Vektorfeld. Dazu wird vorab für jeden Punkt auf der Sensoroberfläche (z.B. jedem Pixel) ein zugehöriger Winkel ermittelt und in einer Datenbank gespeichert. D.h. für jeden Sensorpixel wird basierend auf der Abbildungsfunktion des optischen Elements mit einer Verzeichnungskurve und dem Neigungswinkel der Kamera (siehe Fig. 2c), eine Koordinate dem Zylindergittermuster zugeordnet, das auf dem Bildsensor 11 abgebildet ist. Dabei ist es nicht erforderlich, dass jeder Pixel eine direkte Zuordnung erhält. Die Werte zwischen den gespeicherten Punkten können beispielsweise mittels Interpolation ermittelt werden. Die Ermittlung des Winkels kann empirisch oder mittels Berechnung erfolgen. Es reicht aus über einen Punkt eines Teilbereichs dessen Position auf dem Sensor zu bestimmen. Der Punkt kann beispielsweise ein Mittelpunkt M" des Teilbereichs 12" sein, der im Zentrum des Teilbereichs 12" liegt. Abhängig von der Position des Mittelpunkts M" in dem Teilbereichs 12" auf dem Bildsensor liest die Steuereinheit 20A, 20B einen Verdrehwinkel aus der Datenbank aus und dreht den Teilbereich 12" um den ausgelesenen Winkel.

Zum Erleichtern des Verständnisses ist in Fig. 5j eine Abwicklung des Gitterzylinders aus Fig. 2c bezogen auf die Situation aus Fig. 5i gezeigt. Die Punkte Se1, Se2, Se 3 und Se4 markieren Eckpunkte einer abgewickelten Verschneidung des Kamerasichtfelds und entsprechen den Eckpunkten des Bildsensors Se1, Se2, Se 3 und Se4. Wie Fig. 5j entnommen werden kann, weist der Teilbereich 12 eine Höhe H und eine Breite W auf, während der Teilbereich 12" eine Höhe H" und eine Breite W" aufweist, die jeweils annähernd gleich sind (H ~ H", W ∼ W").

Die Übertragung des gedrehten Teilbereichs 12" von dem Bildsensor 11 auf den Monitor 30 kann mittels einer Transformationsmatrix basierend auf der veränderten Geometrie und der Verdrehung (Rotation) erfolgen. Dabei entsprechen die Punkte Se1, Se2, Se 3 und Se4 den Punkten ME1 bis ME 4 auf dem Monitor. Der Teilbereich 12" wird somit insgesamt auf dem Monitor 30 abgebildet. Wie in Fig. 5 k gezeigt ist, sind die Objekte 40 und 60 durch die veränderte Geometrie und die Verdrehung des Teilbereichs 12" auf dem Bildsensor nahezu verzeichnungsfrei auf dem Monitor 30 dargestellt. Das Objekt 40 weist beispielsweise eine Breite L" auf dem Monitor 30 auf, die dem Verhältnis der Breite L des Objekts 40 in der Fahrzeugumgebung entspricht.

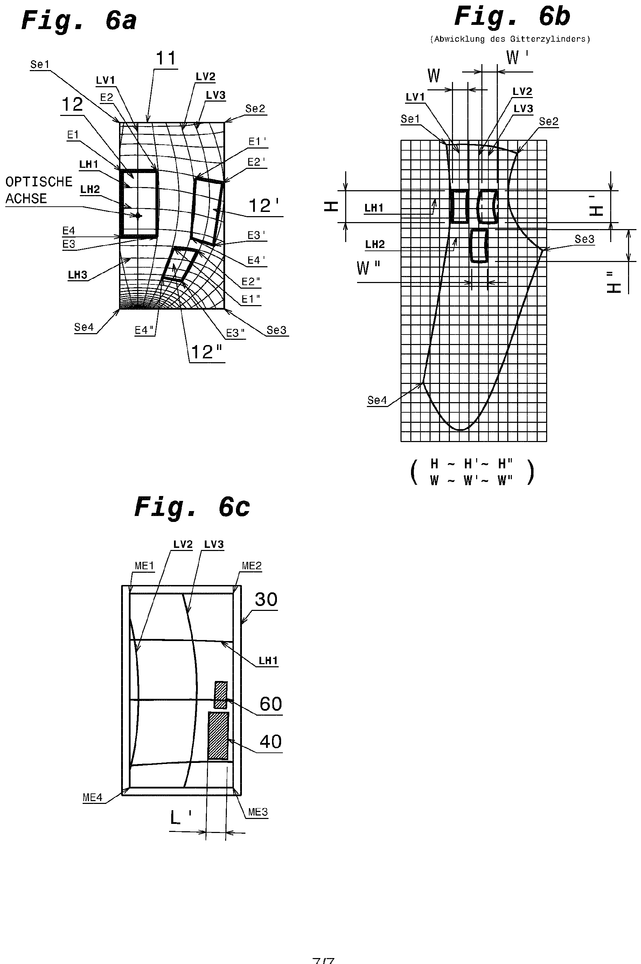

Fig. 6a bis 6c zeigen eine weitere Vorgehensweise, wie die Geometrie eines Teilbereichs 12, 12', 12"abhängig von der Position auf dem Bildsensor 11 angepasst wird, so dass ein Verzeichnungsverhalten eines optischen Elements möglichst kompensiert wird. Wie in Fig. 6a gezeigt ist, sind auf dem Bildsensor drei Teilbereiche 12, 12' und 12" definiert. Alle drei Teilbereiche 12, 12' und 12" werden abhängig von ihrer jeweiligen Position auf dem Bildsensor 11 einer Matrixtransformation, d.h. einer perspektivischen Transformation, unterzogen.

Im Gegensatz zu der Vorgehensweise aus Fig. 5i bis 5k wird bei der Fig. 6a bis 6c zugrunde liegenden Vorgehensweise jedoch bei der Ermittlung der Geometrie der Teilbereiche 12, 12' und 12" an gewissen Positionen nicht der Verdrehwinkel ermittelt, sondern es werden charakteristische Punkte der Teilbereiche 12, 12' und 12", wie beispielsweise die Eckpunkte der Teilbereiche 12, an denen sich die Seitenkanten des jeweiligen Teilbereichs 12, 12', 12" jeweils überscheiden, zur Ermittlung der Geometrie herangezogen. Mit Bezug auf Fig. 6a und 6c werden für den Teilbereich 12 die Punkte E1 bis E4, für den Teilbereich die Punkte E1' bis E4' bzw. für den Teilbereich 12" die Punkte E1" bis E4" als Eingangsdaten für eine Matrixtransformation herangezogen während die Eckpunkte des Monitors ME1 bis ME4 die Zieldaten für die Matrixtransformation bilden.

Fig. 6b zeigt erneut eine Abwicklung des Gitterzylinders aus Fig. 2c gezeigt. Die Punkte Se1, Se2, Se 3 und Se4 markieren wieder Eckpunkte einer abgewickelten Verschneidung des Kamerasichtfelds und entsprechen den Eckpunkten des Bildsensors Se1, Se2, Se 3 und Se4. Wie Fig. 6b entnommen werden kann, weist der Teilbereich 12 eine Höhe H und eine Breite W auf, während der Teilbereich 12' eine Höhe H' und eine Breite W' und der Teilbereich 12" eine Höhe H" und eine Breite W" aufweisen, die jeweils annähernd gleich sind (H ~ H' ~ H", W ~W' ~ W").

Die Übertragung der Teilbereiche 12, 12' und 12" von dem Bildsensor 11 auf den Monitor 30 erfolgt mittels einer Transformationsmatrix. Die Eckpunkte ME1 bis ME4 bilden dabei Zieldaten/Zielpunkte des Teilbereichs 12', die den Eckpunkten E1' bis E4' entsprechen. Dadurch, wie in Fig. 6c gezeigt ist, weist das Objekt 40 beispielsweise eine Breite L' auf dem Monitor 30 auf, die dem Verhältnis der Breite L des Objekts 40 in der Fahrzeugumgebung entspricht. Allgemein ist die Form der Teilbereiche 12, 12', 12" auf dem Bildsensor 11 und entsprechend auf dem Monitor 30 abhängig von dem Verzeichnungsverhalten des optischen Elements.

Ein Verzeichnungsverhalten eines optischen Elements kann somit durch Anpassung der Geometrie und einer zusätzlichen Verdrehung der Geometrie abhängig von der Position der Geometrie auf dem Bildsensor noch wirkungsvoller kompensiert werden als mit einer Anpassung der Geometrie allein. Die Erfindung soll so verstanden werden, dass zur Kompensation eines Verzeichnungsverhaltens eines optischen Elements auch eine ausschließliche Verdrehung der Geometrie erfolgen kann.

Allgemein kann die Darstellung der Umgebung um ein Fahrzeug, d.h. die Darstellung der Bilddaten aus den Abbildungswinkeln und damit der Teilbereiche, auf einem einzigen Monitor mit nur einem einzigen Monitorbereich zeitlich hintereinander oder auf einem einzigen Monitor mit getrennten Monitorbereichen gleichzeitig erfolgen. Die getrennten Monitorbereiche können nebeneinander oder übereinander in einer Links-Rechts-Richtung des Monitors angeordnet sein und weiter Sichtfelder eines Hauptspiegels und eines Weitwinkelspiegels eines Nutzfahrzeugs, beispielsweise wie in der ECE R46 geregelt, enthalten, z.B. das Sichtfeld eines Hauptspiegels in einem oberen Monitorbereich und das Sichtfeld eines Weitwinkelspiegels in einem unteren Monitorbereich. Es ist auch denkbar alle Sichtfelder in einem Monitor mit einem einzigen Monitorbereich dargestellt werden. Dies erfordert räumlich aneinander grenzende oder zumindest nah beieinander liegende Teilbereiche und eine kontinuierliche oder abschnittsweise Kompensation des Verzeichnungsverhaltens des optischen Elements über die Bildsensorfläche, in der sich die Teilbereiche befinden, so dass ein durchgängiges, lückenloses Bild der Fahrzeugumgebung entsteht, das dem Fahrer ein schnelles Einschätzen der Fahrzeugumgebung ermöglicht. Schließlich können die Teilbereiche zu verschiedenen Zeitpunkten dargestellt werden, z.B. abhängig von Fahrsituationen oder Eingaben des Fahrers. Schließlich ist auch eine Darstellung der verschiedenen Teilbereiche auf mehreren Monitoren denkbar.

Es wird explizit betont, dass alle in der Beschreibung und/oder den Ansprüchen offenbarten Merkmale als getrennt und unabhängig voneinander zum Zweck der ursprünglichen Offenbarung ebenso wie zum Zweck des Einschränkens der beanspruchten Erfindung unabhängig von den Merkmalskombinationen in den Ausführungsformen und/oder den Ansprüchen angesehen werden sollen. Es wird explizit festgehalten, dass alle Bereichsangaben oder Angaben von Gruppen von Einheiten jeden möglichen Zwischenwert oder Untergruppe von Einheiten zum Zweck der ursprünglichen Offenbarung ebenso wie zum Zweck des Einschränkens der beanspruchten Erfindung offenbaren, insbesondere auch als Grenze einer Bereichsangabe.

### BEZUGSZEICHENLISTE

- 10, 10A, 10B: Bildaufnahmeeinheit, Kamera
- 11: Bildsensor
- 12, 12', 12": Teilbereich
- 20A, 20B: Bildbearbeitungseinheit
- 30, 30A, 30B: Bildwiedergabeeinheit, Monitor
- 40: Objekt
- 50: Objekt
- 60: Objekt
- 70: Objekt
- 100A, 100B: Sichtsystem
- a_{R}: Rotationsachse
- E1-E4, E1'-E4', E1"-E4": Bildsensorpunkte
- FO: Fahrbahnoberfläche
- H, H', H": Höhe
- HL_{O}: horizontalen Linie durch den ersten Hauptpunkt der Optik
- HL: horizontale Netzlinien
- K, K1, K2: Kompensationskurve
- LH, LH1, LH2, LH3: horizontale gebogene (virtuelle) Linien
- M, M', M": Mittelpunkt
- ME1-ME4: Monitorzielpunkte
- P, P', P", P1, P1': Breite der Teilbereiche
- P2, P2': Länge der Teilbereiche
- LV1, LV2, LV3: vertikale gebogene (virtuelle) Linien
- Sk1, Sk2, Sk3, Sk4: Sichtfeldkante
- Se1, Se2, Se3, Se4: Eckpunkten des Bildsensors
- VL: vertikale Netzlinien
- W, W', W": Breite
- α1, α1': Abbildungswinkel der Kamera in erster Raumrichtung
- α2, α2': Abbildungswinkel der Kamera in zweiter Raumrichtung
- β: Ausrichtungswinkel
- β': Anordnungswinkel
- γ1: Sichtwinkel der Kamera in erster Raumrichtung
- γ1^{∗}: Projektion des Sichtwinkels der Kamera in erster Raumrichtung
- γ2: Sichtwinkel der Kamera in zweiter Raumrichtung
- γ2^{∗}: Projektion des Sichtwinkels der Kamera in zweiter Raumrichtung

## Patentansprüche

1. Sichtsystem (100A, 100B) für ein Fahrzeug (1), enthaltend
wenigstens eine Bildaufnahmeeinheit (10, 10A, 10B) zum Aufnehmen von Bilddaten eines Bereichs um das Fahrzeug (1), wobei die Bildaufnahmeeinheit (10, 10A, 10B) einen Bildsensor (11) und ein optisches Element aufweist, das eine Verzeichnungskurve aufweist, wobei die Bilddaten abhängig von der Position auf dem Bildsensor (11) in Übereinstimmung mit der Verzeichnungskurve des optischen Elements verzeichnet sind,
wenigstens eine Bildbearbeitungseinheit (20A, 20B) zum Bearbeiten der von der Bildaufnahmeeinheit (10, 10A, 10B) aufgenommenen Bilddaten, und
wenigstens eine Bildwiedergabeeinheit (30, 30A, 30B) zum Wiedergeben der von der Bildbearbeitungseinheit (20A, 20B) bearbeiteten Bilddaten,
**dadurch gekennzeichnet, dass**
die Bildbearbeitungseinheit (20A, 20B) angepasst ist zum Entnehmen wenigstens eines Teilbereichs (12, 12') aus den Bilddaten des Bildsensors (11), wobei die Geometrie des Teilbereichs (12, 12') abhängig von der Position des Teilbereichs (12, 12') auf dem Bildsensor (11) ist.

2. Sichtsystem (100A, 100B) nach Anspruch 1, wobei der Teilbereich (12) einen Referenzteilbereich (12) mit einer Referenzgeometrie definiert.

3. Sichtsystem (100A, 100B) nach Anspruch 2, wobei der Teilbereich (12) einen Referenzteilbereich definiert, wenn der Teilbereich (12) dem Bildsensor (11) in der Nähe einer Position entnommen wird, die der Abbildung eines Verzeichnungszentrums der Bildaufnahmeeinheit (10, 10A, 10B) auf dem Bildsensor (11) entspricht, wobei der Teilbereich (12) dem Bildsensor (11) vorzugsweise an einer Position oder unmittelbar an eine Position angrenzend entnommen wird, die der Abbildung des Verzeichnungszentrums der Bildaufnahmeeinheit (10, 10A, 10B) auf dem Bildsensor (11) entspricht.

4. Sichtsystem (100A, 100B) nach Anspruch 3, wobei das Verzeichnungszentrum die optische Achse ist.

5. Sichtsystem (100A, 100B) nach einem der Ansprüche 2 bis 4, wobei die Referenzgeometrie ein Rechteck mit einer Breite (P1) und einer Länge (P2) ist.

6. Sichtsystem (100A, 100B) nach einem der Ansprüche 2 bis 5, wobei der Teilbereich (12') eine gegenüber der Referenzgeometrie verdrehte und/oder verzerrte und/oder skalierte Geometrie aufweist, wenn der Teilbereich (12') entfernt von der Position angeordnet ist, die der Abbildung des Verzeichnungszentrums der Bildaufnahmeeinheit (10, 10A, 10B) auf dem Bildsensor (11) entspricht.

7. Sichtsystem (100A, 100B) nach Anspruch 6, wobei der Grad der Verdrehung und/oder Verzerrung und/oder Skalierung der Referenzgeometrie mit zunehmendem Abstand zu der Abbildung des Verzeichnungszentrums der Bildaufnahmeeinheit (10, 10A, 10B) auf dem Bildsensor (11) zumindest bereichsweise zunimmt, oder wobei der Grad der Verdrehung und/oder Verzerrung und/oder Skalierung der Referenzgeometrie mit zunehmendem Abstand zu der Abbildung des Verzeichnungszentrums der Bildaufnahmeeinheit (10, 10A, 10B) auf dem Bildsensor (11) bereichsweise abnimmt.

8. Sichtsystem (100A, 100B) nach einem der vorangehenden Ansprüche, wobei die Bestimmung einer ersten Abmessung der Geometrie des Teilbereichs (12') in einer ersten Raumrichtung erfolgt, wobei die Bestimmung einer zweiten Abmessung der Geometrie des Teilbereichs (12') vorzugsweise in einer zweiten Raumrichtung erfolgt, wobei die erste und die zweite Raumrichtung weiter vorzugsweise senkrecht zueinander verlaufen.

9. Sichtsystem (100A, 100B) nach einem der vorangehenden Ansprüche, wobei die Geometrie des Teilbereichs (12') mittels eines Berechnungsalgorithmus bestimmt wird.

10. Sichtsystem (100A, 100B) nach Anspruch 9, wobei der Berechnungsalgorithmus wenigstens eine Kompensationskurve (K) verwendet, mit der die Breite (P1') und/oder die Länge (P2') des Teilbereichs (12') auf dem Bildsensor (11) abhängig von einer Lageänderung des dem Teilbereich (12, 12') entsprechenden Abbildungswinkels (α, α1, α2) der Bildaufnahmeeinheit (10, 10A, 10B) bestimmt wird.

11. Sichtsystem (100A, 100B) nach Anspruch 10, wobei die Kompensationskurve (K) einer nicht-linearen Kurve und/oder wenigstens einer mathematischen Funktion entspricht, und/oder wobei die Kompensationskurve (K) einer frei definierten Kurve entspricht, wobei die Werte der frei definierten Kurve vorzugsweise empirisch ermittelt und in der Bearbeitungseinheit (20A, 20B) gespeichert sind.

12. Sichtsystem (100A, 100B) nach Anspruch 10, wobei die Kompensationskurve (K) der Verzeichnungskurve des optischen Elements entspricht, wobei die Kompensationskurve (K) vorzugsweise zusätzlich einer Verzeichnungskurve des optischen Elements mit digitaler Verzeichnungskorrektur entspricht.

13. Sichtsystem (100A, 100B) nach einem der Ansprüche 2 bis 12, wobei der dem Referenzteilbereich (12) entsprechenden Abbildungswinkel (α, α1, α2) und der dem Teilbereich (12') entsprechenden Abbildungswinkel (α1', α1', α2') gleich sind.

14. Sichtsystem (100A, 100B) nach einem der vorangehenden Ansprüche, wobei der Teilbereich (12, 12') das Sichtfeld eines Hauptspiegels und/oder eines Weitwinkelspiegels eines Nutzfahrzeugs enthält.

15. Spiegelersatzsystem für ein Fahrzeug mit einem Sichtsystem (100A, 100B) nach einem der Ansprüche 1 bis 14.

## Claims

1. View system (100A, 100B) for a vehicle (1), comprising
at least one image capture unit (10, 10A, 10B) for capturing image data of a portion around a vehicle (1), wherein the image capture unit (10, 10A, 10B) has an image sensor (11) and an optical element, which has a distortion curve, wherein the image data dependent on the position on the image sensor (11) are distorted in accordance with the distortion curve of the optical element,
at least one image processing unit (20A, 20B) for processing the image data captured by the image capture unit (10, 10A, 10B), and
at least one reproduction unit (30, 30A, 30B) for reproducing the image data processed by the image processing unit (20A, 20B),
**characterized in that** the image processing unit (20A, 20B) is configured for taking at least one partial portion (12, 12') from the image data of the image sensor (11), wherein the geometry of the partial portion (12, 12') is dependent on the position of the partial portion (12, 12') on the image sensor (11).

2. View system (100A, 100B) according to claim 1, wherein the partial portion (12) defines a reference partial portion (12) with a reference geometry.

3. View system (100A, 100B) according to claim 2, wherein the partial portion (12) defines a reference partial portion, if the partial portion (12) is taken from the image sensor (11) in the vicinity of a position which corresponds to the depiction of a center of distortion of the image capture unit (10, 10A, 10B) on the image sensor (11), wherein the partial portion (12) is preferably taken from the image sensor (11) at a position or directly adjacent to a position which corresponds to the depiction of the center of distortion of the image capture unit (10, 10A, 10B) on the image sensor (11).

4. View system (100A, 100B) according to claim 3, wherein the center of distortion is the optical axis.

5. View system (100A, 100B) according to any one of claims 2 to 4, wherein the reference geometry is a rectangle with a width (P1) and a length (P2).

6. View system (100A, 100B) according to any one of claims 2 to 5, wherein the partial portion (12') has a geometry which is rotated and/or distorted and/or scaled with respect to the reference geometry, if the partial portion (12') is arranged distally to the position which corresponds to the depiction of the center of distortion of the image capture unit (10, 10A, 10B) on the image sensor (11).

7. View system (100A, 100B) according to claim 6, wherein the degree of rotation and/or distortion and/or scaling of the reference geometry increases at least partially with increasing distance to the depiction of the center of distortion of the image capture unit (10, 10A, 10B) on the image sensor (11), or wherein the degree of rotation and/or distortion and/or scaling of the reference geometry decreases area by area with increasing distance to the depiction of the center of distortion of the image capture unit (10, 10A, 10B) on the image sensor (11).

8. View system (100A, 100B) according to any one of the preceding claims, wherein the determination of a first dimension of the geometry of the partial portion (12') occurs in a first spatial direction, wherein the determination of a second dimension of the geometry of the partial portion (12') occurs in a second spatial direction, wherein the first and the second spatial directions preferably run perpendicular to each other.

9. View system (100A, 100B) according to any one of the preceding claims, wherein the geometry of the partial portion (12') is determined by means of a calculation algorithm.

10. View system (100A, 100B) according to claim 9, wherein the calculation algorithm uses at least one compensation curve (K), with which the width (P1') and/or the length (P2') of the partial portion (12') on the image sensor (11) is determined dependent on a change in position of the depiction angle (α, α1, α2) of the image capture unit (10, 10A, 10B) corresponding to the partial portion (12, 12').

11. View system (100A, 100B) according to claim 10, wherein the compensation curve (K) corresponds to a non-linear curve and/or at least one mathematical function, and/or wherein the compensation curve (K) corresponds to a freely defined curve, wherein the values of the freely defined curve are empirically determined and stored in the processing unit (20A, 20B).

12. View system (100A, 100B) according to claim 10, wherein the compensation curve (K) corresponds to the distortion curve of the optical element, wherein the compensation curve (K) preferably additionally corresponds to a compensation curve of the optical element with a digital distortion correction.

13. View system (100A, 100B) according to any one of claims 2 to 12, wherein the depiction angle (α, α1, α2), which corresponds to the reference partial portion (12), and the depiction angle (α', α1', α2'), which corresponds to the partial portion (12'), are equal.

14. View system (100A, 100B) according to any one of the preceding claims, wherein the partial portion (12, 12') includes the field of view of a main mirror and/or a wide angle mirror of a commercial vehicle.

15. Mirror replacement system for a vehicle with a view system (100A, 100B) according to any one of claims 1 to 14.

## Revendications

1. Système visuel (100A, 100B) pour un véhicule (1), contenant
au moins une unité d'enregistrement d'image (10, 10A, 10B) pour l'enregistrement de données d'image d'une zone autour du véhicule (1), dans lequel l'unité d'enregistrement d'image (10, 10A, 10B) présente un capteur d'image (11) et un élément optique qui présente une courbe de distorsion, dans lequel les données d'image sont distordues en fonction de la position sur le capteur d'image (11) en concordance avec la courbe de distorsion de l'élément optique,
au moins une unité de traitement d'image (20A, 20B) pour le traitement des données d'image enregistrées par l'unité d'enregistrement d'image (10, 10A, 10B), et
au moins une unité de rendu d'image (30, 30A, 30B) pour le rendu des données d'image traitées par l'unité de traitement d'image (20A, 20B),
**caractérisé en ce que**
l'unité de traitement d'image (20A, 20B) est adaptée au retrait d'au moins une zone partielle (12, 12') des données d'image du capteur d'image (11), dans lequel la géométrie de la zone partielle (12, 12') dépend de la position de la zone partielle (12, 12') sur le capteur d'image (11).

2. Système visuel (100A, 100B) selon la revendication 1, dans lequel la zone partielle (12) définit une zone partielle de référence (12) avec une géométrie de référence.

3. Système visuel (100A, 100B) selon la revendication 2, dans lequel la zone partielle (12) définit une zone partielle de référence lorsque la zone partielle (12) est retirée du capteur d'image (11) à proximité d'une position qui correspond à l'illustration d'un centre de distorsion de l'unité d'enregistrement d'image (10, 10A, 10B) sur le capteur d'image (11), dans lequel la zone partielle (12) est retirée du capteur d'image (11) de préférence de manière contiguë à une position ou directement à une position qui correspond à l'illustration du centre de distorsion de l'unité d'enregistrement d'image (10, 10A, 10B) sur le capteur d'image (11).

4. Système visuel (100A, 100B) selon la revendication 3, dans lequel le centre de distorsion est l'axe optique.

5. Système visuel (100A, 100B) selon l'une quelconque des revendications 2 à 4, dans lequel la géométrie de référence est un rectangle avec une largeur (P1) et une longueur (P2).

6. Système visuel (100A, 100B) selon l'une quelconque des revendications 2 à 5, dans lequel la zone partielle (12') présente une géométrie tordue et/ou déformée et/ou mise à l'échelle par rapport à la géométrie de référence lorsque la zone partielle (12') est agencée éloignée de la position qui correspond à l'illustration du centre de distorsion de l'unité d'enregistrement d'image (10, 10A, 10B) sur le capteur d'image (11).

7. Système visuel (100A, 100B) selon la revendication 6, dans lequel le degré de torsion et/ou de déformation et/ou de mise à l'échelle de la géométrie de référence augmente au moins par endroits à distance croissante de l'illustration du centre de distorsion de l'unité d'enregistrement d'image (10, 10A, 10B) sur le capteur d'image (11), ou dans lequel le degré de torsion et/ou de déformation et/ou de mise à l'échelle de la géométrie de référence diminue par endroits à distance croissante de l'illustration du centre de distorsion de l'unité d'enregistrement (10, 10A, 10B) sur le capteur d'image (11).

8. Système visuel (100A, 100B) selon l'une quelconque des revendications précédentes, dans lequel la détermination d'une première dimension de la géométrie de la zone partielle (12') est effectuée dans un premier sens spatial, dans lequel la détermination d'une seconde dimension de la géométrie de la zone partielle (12') est effectuée de préférence dans un second sens spatial, dans lequel le premier et le second sens spatial s'étendent encore de préférence perpendiculairement l'un à l'autre.

9. Système visuel (100A, 100B) selon l'une quelconque des revendications précédentes, dans lequel la géométrie de la zone partielle (12') est déterminée au moyen d'un algorithme de calcul.

10. Système visuel (100A, 100B) selon la revendication 9, dans lequel l'algorithme de calcul utilise au moins une courbe de compensation (K), avec laquelle la largeur (P1') et/ou la longueur (P2') de la zone partielle (12') est déterminée sur le capteur d'image (11) en fonction d'une modification de position de l'angle d'illustration (α, α1, α2) correspondant à la zone partielle (12, 12') de l'unité d'enregistrement d'image (10, 10A, 10B).

11. Système visuel (100A, 100B) selon la revendication 10, dans lequel la courbe de compensation (K) correspond à une courbe non linéaire et/ou au moins une fonction mathématique, et/ou dans lequel la courbe de compensation (K) correspond à une courbe librement définie, dans lequel les valeurs de la courbe librement définie sont calculées de préférence de manière empirique et sont enregistrées dans l'unité de traitement (20A, 20B).

12. Système visuel (100A, 100B) selon la revendication 10, dans lequel la courbe de compensation (K) correspond à la courbe de distorsion de l'élément optique, dans lequel la courbe de compensation (K) correspond de préférence en outre à une courbe de distorsion de l'élément optique avec une correction de distorsion numérique.

13. Système visuel (100A, 100B) selon l'une quelconque des revendications 2 à 12, dans lequel l'angle d'illustration (α, α1, α2) correspondant à la zone partielle de référence (12) et l'angle d'illustration (α', α1', α2') correspondant à la zone partielle (12') sont identiques.

14. Système visuel (100A, 100B) selon l'une quelconque des revendications précédentes, dans lequel la zone partielle (12, 12') contient le champ de vision d'un rétroviseur principal et/ou d'un rétroviseur grand angle d'un véhicule utilitaire.

15. Système de remplacement de rétroviseur pour un véhicule avec un système visuel (100A, 100B) selon l'une quelconque des revendications 1 à 14.
